# EUROPEAN PATENT APPLICATION

(11) **EP 1 746 597 A2**
(43) Date of publication of application: **24.01.2007**
(21) Application number: 06117379.5
(22) Date of filing: 18.07.2006
(51) Int. Cl.: G11B 20/12

(54) **Method and apparatus for recording different formats on a multilayer optical disc**

(30) Priority: 21.07.2005 JP 2005211467
(71) Applicant: Kabushi Kaisha Toshiba, Tokyo 105-8001 (JP)
(72) Inventor: Ogawa, Akihito c/o Toshiba Corporation, Tokyo 105-8001 (JP); Kimura, Shunsuke c/o Toshiba Corporation, Tokyo 105-8001 (JP); Takahashi, Hideki c/o Toschiba Corporation, Tokyo 105-8001 (JP)
(74) Representative: Henkel, Feiler & Hänzel

(57) **Abstract**

According to one embodiment, a disc shaped multilayered information recording medium, comprising a lead-in area formed at an inner periphery portion, and information recording layers between the inner periphery portion and an outer periphery portion, wherein the lead-in area records information indicating a format of each of the information recording layers, and is configured so that a type of a format used in each of the information recording layers is identified in accordance with the information indicating the format.

## Description

One embodiment of the invention relates to an information recording medium such as an optical disc capable of recording and/or reproducing operation, a recording method, and a reproducing method and apparatus thereof.

Conventionally, among information recording media represented by a DVD (Digital Versatile disc) or the like, there have been a medium in which recording layers are multi-layered (Jpn. Pat. Appln. KOKAI Publication Nos. 2004-355714 and 2004-206849). In Jpn. Pat. Appln. KOKAI Publication No. 2004-355714, a plurality of recording layers are regarded and handled as a virtually single layer independent recording medium, thereby making it possible to apply a rule in the case of handling a single layer information recording medium other than in a case of a selecting operation of a plurality of recording layers. On the other hand, an information recording medium of Jpn. Pat. Appln. KOKAI Publication No. 2004-206849 comprises a plurality of recording layers; and a disc information area having stored therein parameters relating to access to the plurality of recording layers and formats relating to the plurality of recording layers. The disc information area used here is allocated in one of the plurality of recording layers (a first recording layer).

In Jpn. Pat. Appln. KOKAI Publication No. 2004-355714, the rule in the case of handling single layer information recording media is applied as it is. Thus, even if the information recording medium is multi-layered, a memory capacity per medium merely increases. On the other hand, in Jpn. Pat. Appln. KOKAI Publication No. 2004-206849, a disc information area of one information recording medium can store a format relating a plurality of recording layers. Therefore, there is a possibility that information defined in different formats is stored separately in the recording layers. However, in the case where one disc has a plurality of recording layers in which recording has been made in different formats, a drive device for reproducing this disc (or carrying out recording in this disc) must recognize formats of the recording layers on an individual disc by disc basis.

It is an object of the present invention to enable recording or reproducing operation with respect to a multi-layered recording medium capable of recording plural types of information in a plurality of recording layers in different formats such as HD DVD (High Definition DVD using blue laser beams) and standard DVD (Standard Definition DVD) using red laser beams while formats of layers are recognized.

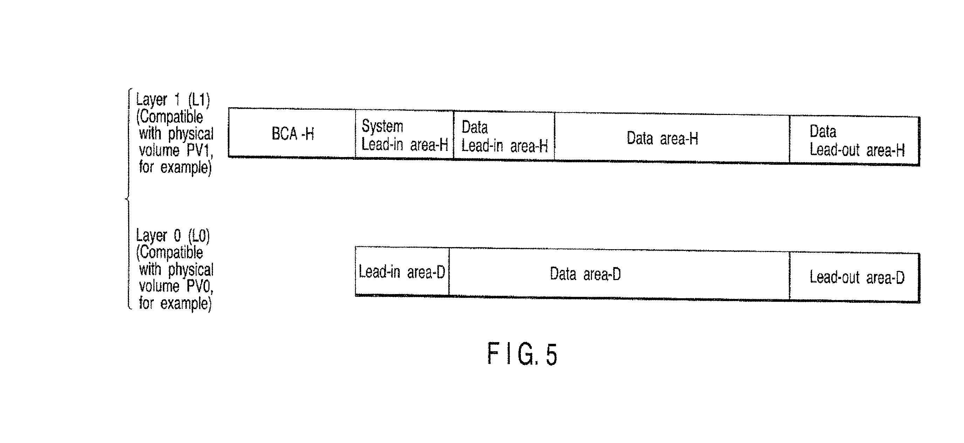

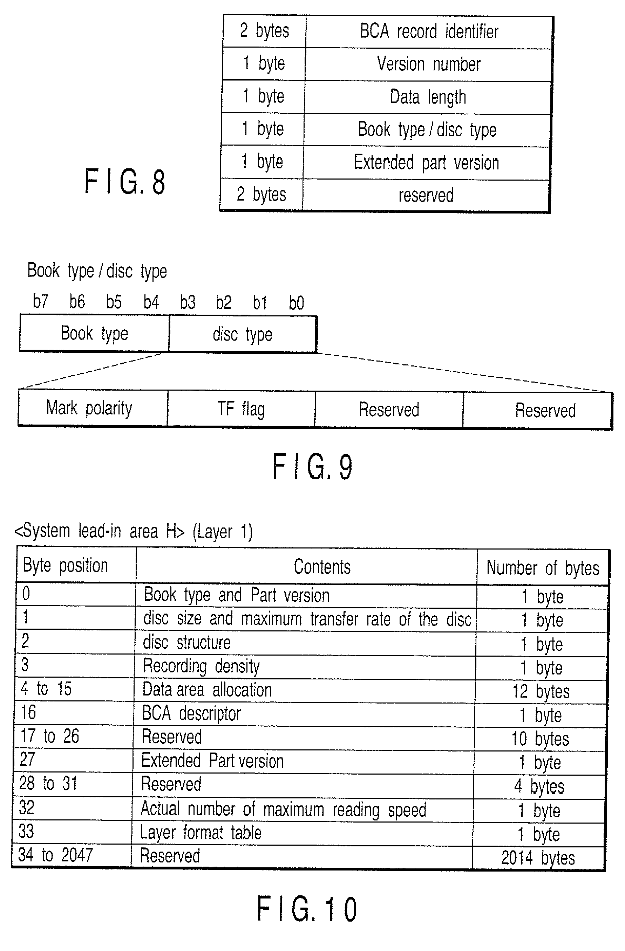

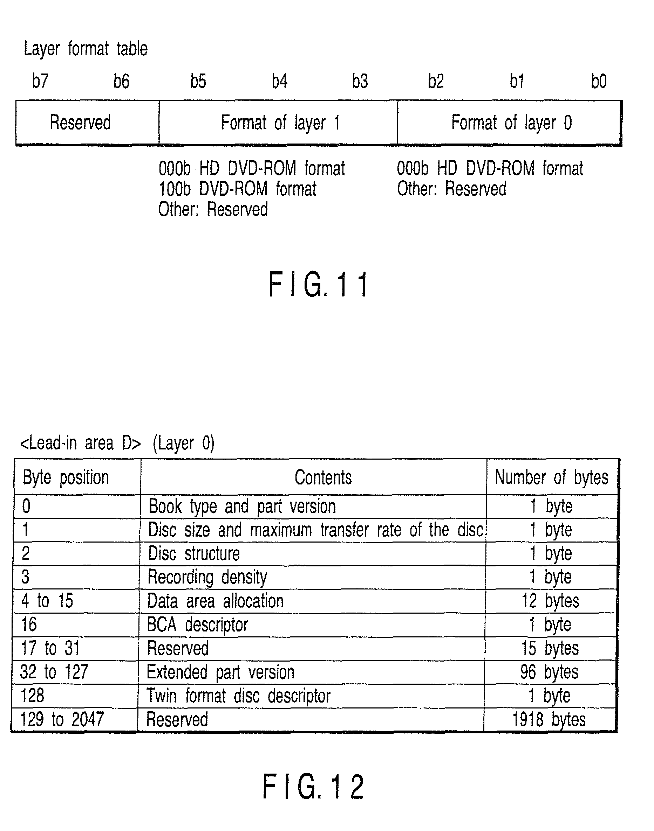

A disc shaped multi-layered information recording medium according to an embodiment of the present invention comprises a lead-in area at an inner periphery portion thereof, and a plurality of information recording layers (such as layer 0 and layer 1) between the inner periphery portion and an outer periphery portion thereof. The lead-in area used here (for example, lead-in area H shown in FIG. 5) includes the plurality of information (layer format tables shown in FIGS. 10 and 11) indicating a format of each of the plurality of information recording layers (layer 1 and layer 0). This lead-in area is also configured so as to identify a type of format (such as HD DVD-ROM format or DVD-ROM format) used in each of the plurality of information recording layers (layer 0 and layer 1) in accordance with the information indicating such each format (format information on layer 1 and format information on layer 0).

Even if plural types of information have been recorded in one multi-layered information recording medium in different formats, they can be distinctively reproduced. Alternatively, plural types of information can be recorded in different formats in a plurality of recording layers of one multi-layered information recording medium.

The invention can be more fully understood from the following detailed description when taken in conjunction with the accompanying drawings, in which:
FIG. 1 is an exemplary view illustrating a general configuration of a player/recorder 100 for carrying out recording and/or reproducing operation of information with respect to a disc shaped multi-layered information recording medium (multi-format disc or twin format disc) according to an embodiment of the present invention;
FIG. 2 is an exemplary view illustrating a general configuration of a personal computer for carrying out recording and/or reproducing operation of information with respect to a disc shaped multi-layered information recording medium (multi-format disc or twin format disc) according to another embodiment of the present invention;
FIG. 3 is an exemplary view illustrating a general configuration of an optical disc device (disc drive) shown in FIG. 1 or 2;
FIG. 4 is an exemplary view illustrating a general configuration of a disc shaped multi-layered information recording medium according to an embodiment of the present invention (twin format disc in the present embodiment);
FIG. 5 is an exemplary view illustrating a layout example of layers of a twin format disc (TF disc);
FIG. 6 is an exemplary view illustrating an example of formats allocated in layers of a twin format disc (or multi-format disc);
FIG. 7 is an exemplary view showing a configuration of information recorded in a burst cutting area (BCA) provided in layer 1 of the twin format disc (or multi-format disc);
FIG. 8 is an exemplary view illustrating an example of the contents of information recorded in the burst cutting area (BCA);
FIG. 9 is an exemplary view illustrating a specific example of part (book type/disc type) of information recorded in the burst cutting area (BCA);
FIG. 10 is an exemplary view illustrating a specific example of emboss pit information provided in a system lead-in area H of layer 1 of the twin format disc (or multi-format disc);
FIG. 11 is an exemplary view illustrating a specific example of part (layer format table) of the emboss pit information shown in FIG. 10;
FIG. 12 is an exemplary view illustrating a specific example of emboss pit information provided in a lead-in area D of layer 0 of the twin format disc (or multi-format disc);
FIG. 13 is an exemplary view illustrating a general configuration of an optical system (single objective lens/multi beam single optical head) for recording or reproducing information for layers of the twin format disc (or multi-format disc) by using laser light beams;
FIG. 14 is an exemplary view illustrating a general configuration of an optical system (single-beam multi-optical head or multi-lens/multi-beam single optical head) for recording or reproducing information for layers of the twin format disc (or multi-format disc) by using laser light beams;
FIG. 15 is an exemplary view illustrating a specific example of specification (combination of laser wavelength, number of objective lens apertures, and demodulating system) of a disc device compatible with formats of the twin format disc (or multi-format disc);
FIG. 16 is an exemplary view illustrating an example (dual layer disc which is not a twin format type) in which, even if layers (L0*, L1*) are recorded in the same format, and recording information (Data 0*, Data 1*) is physically divided into a plurality of layers, recording information (Data 0* + Data 1*) is logically handled as one item of information;
FIG. 17 is an exemplary view illustrating an example in which recording information (Data 0, Data 1) contained in layers (L0, L1) is recorded in individual formats (in the same or different formats), and the recording information (Data 0, Data 1) is physically and logically handled as being divided into a plurality of layers, i.e., an example in which, even if one dual layer disc is physically handled, the disc is logically equivalent to two individual single-layer discs (twin format dual layer disc);
FIG. 18 is a state transition chart illustrating a transition (example 1) of a reproduction state in an optical disc device (disc drive);
FIG. 19 is a state transition chart illustrating a transition (example 2) of a reproduction state in an optical disc device (disc drive) having a twin format disc (TF disc) mounted thereon;
FIG. 20 is an exemplary view illustrating an example of commands (a list of applicable commands) possessed by the optical disc device (disc drive) handling the twin format disc (or multi-format disc);
FIG. 21 is an exemplary view illustrating an example of a response format to inquiry of disc management information, used in the optical disc device (disc drive) handling the twin format disc (or multi-format disc);
FIG. 22 is an exemplary view illustrating an example of a transmission format of disc management information, used in the optical disc device (disc drive) handling the twin format disc (or multi-format disc);
FIG. 23 is an exemplary view illustrating an example of functions (a list of applicable functions) possessed by the optical disc device (disc drive) handling the twin format disc (or multi-format disc);
FIGS. 24A and 24B are views each illustrating an example of response of the optical disc device (disc drive) handling the twin format disc (or multi-format disc) in the case where inquiry of a configuration state has been issued from a host;
FIGS. 25A and 25B are views each illustrating an example of response of the optical disc device (disc drive) handling the twin format disc (or multi-format disc) in the case where inquiry of a configuration state has been issued from a host compatible with only DVD reproduction;
FIGS. 26A and 26B are views each illustrating an example of response of an optical disc device (disc drive "compatible with only a standard DVD" which cannot handle a twin format disc (or multi-format disc) in the case where inquiry of a configuration state has been issued from a host;
FIG. 27 is an exemplary view illustrating an optical disc device (disc drive) having a function for switching a default physical volume;
FIG. 28 is a flow chart illustrating an example of a method for reproducing a multi-format disc (twin format disc);
FIG. 29 is a flow chart illustrating an example of a method for switching a physical volume in the multi-format disc (twin format disc);
FIG. 30 is a flow chart illustrating an example in the case where an optical disc device (disc drive) mounts a physical volume of the multi-format disc (twin format disc); and
FIGS. 31A, 31B, 31C, and 31D are views each illustrating an example of a method for judging a layer in the multi-format disc (twin format disc).

Various embodiments according to the invention will be described hereinafter with reference to the accompanying drawings. In general, according to one embodiment of the invention, a disc shaped multi-layered information recording medium, comprising a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format.

Hereinafter, an information storage medium, a recording method, a reproducing method and apparatus according to an embodiment of the present invention will be described with reference to the accompanying drawings.

### <Optical disc recording/reproducing system>

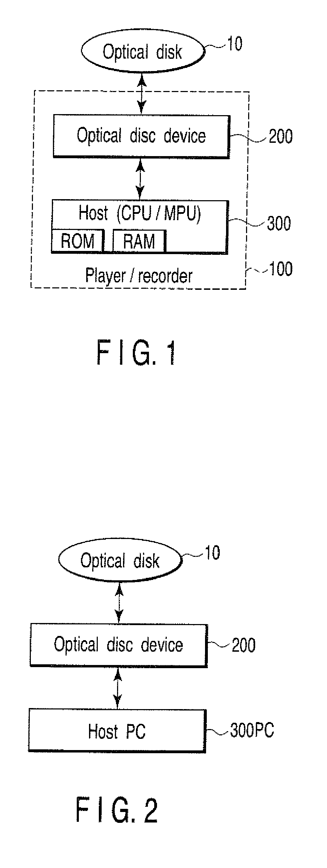

FIG. 1 is a block diagram illustrating a general configuration of an information recording/reproducing system (player/recorder) 100 for carrying out recording and/or reproducing operation of information with respect to a disc shaped multi-layered information recording medium (multi-format disc or twin format disc) according to an embodiment of the present invention.

A term "twin format disc" used here (hereinafter, simply referred to as TF disc) denotes a disc having two recording/reproducing layers, the disc having different formats (different formats specified in a DVD forum) applied to each of the recording/reproducing layers.

The information recording/reproducing system 100 shown in FIG. 1 comprises an optical disc 10 for storing audio/video image information (AV information), user data and the like; an optical disc device (or disc drive) 200 for recording information in the optical disc 10 and/or reproducing information from the optical disc 10; and a host device 300 for issuing a command to the optical disc device 200, reading out required information from the optical disc 10 via the optical disc device 200, and making AV information playback, user information display and the like.

The device 100 such as an optical disc recorder or an optical disc player incorporates the optical disc device 200 and the host device 300, as shown in FIG. 1. The host device 300 comprises: a central processing unit (CPU) or a micro processing unit (MPU); a random access memory (RAM) used as a work area; and a read only memory (ROM) or a nonvolatile memory for storing and holding parameter settings or a variety of data or the like to be held even if power is down. As this nonvolatile memory, there can be used an electrically erasable and programmable ROM (EEPROM), a flash memory and the like. The ROM or nonvolatile memory can record a variety of programs (firmware) executed in response to a user request, data required for processing, and a file system or the like required for file management. For example, the ROM or nonvolatile memory stores: a UDF bridge file system that conforms to a DVD video format; a UDF file system that conforms to a DVD video recording format; a UDF file system that conforms to a next generation video format (HD DVD-Video); a UDF file system that conforms to a next generation video recording format (HD DVD-Recordable); application software or the like.

FIG. 2 is an exemplary view illustrating a general configuration of a personal computer for carrying out recording and/or reproducing operation of information with respect to a disc shaped multi-layered information recording medium (multi-format disc or twin format disc) according to an embodiment of the present invention. In FIG. 1, a host device 300 is provided exclusively for the device 100. In FIG. 2, a CPU/MPU of the personal computer is used as a host device 300 PC by means of software (virtual software player/recorder provided as accessory to an operating system). In a system such as the personal computer as shown in FIG. 2, the personal computer (PC) is provided as a host. Issuance of a command to the optical disc device 200 (general-purpose DVD multiple drives incorporated in a notebook type PC, for example) connected to the host device 300 PC is carried out by executing application software such as OS (operation software), writing software and video reproducing software.

### <Optical disc device>

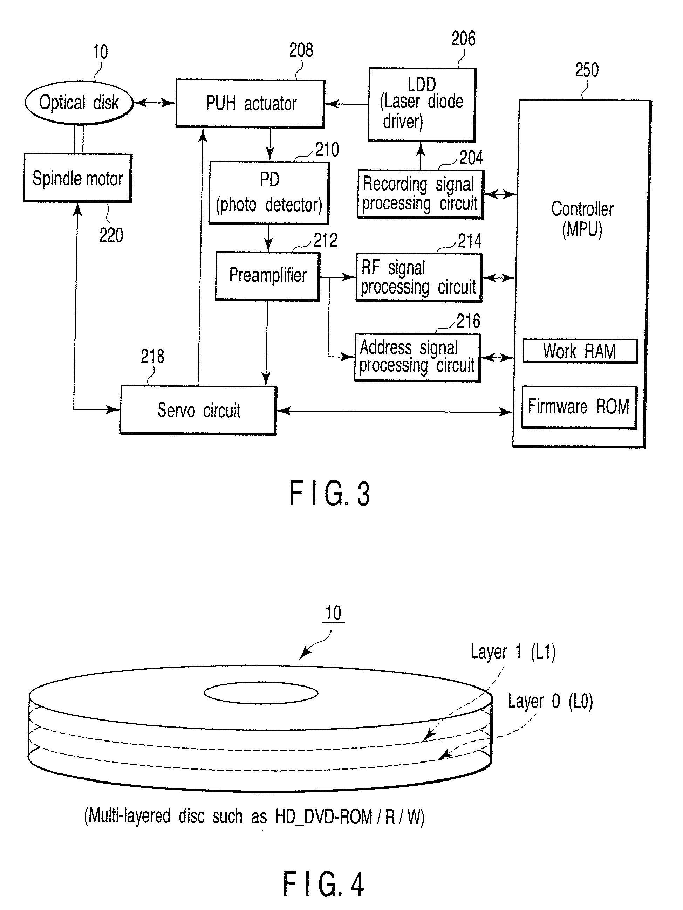

FIG. 3 is a block diagram illustrating a general configuration of the optical disc device (disc drive) 200 shown in FIG. 1 or 2. The optical disc device 200 focuses laser light beams irradiated from an optical pick-up head (PUH) actuator 208 in an information recording layer of an optical disc 10 rotationally driven by means of a spindle motor 220 (adjusts a focus to a target recording layer by means of a focus servo control), thereby carrying out information recording/reproducing operation. The light beams reflected from the disc 10 (layer 0 and/or layer 1 thereof) pass through an optical system of the PUH 208 again, each of which is detected as an electrical signal by means of a photo detector (PD) 210.

The detected electrical signal is amplified by means of a preamplifier 212, and the amplified signal is output to a servo circuit 218 and an RF signal processing circuit 214 and an address signal processing circuit 216. The servo circuit 218 generates servo signals such as focus, tracking, tilt, and rotation speed, and these servo signals are output to focus, tracking, and tilt actuators, although not shown, in the PUH 208, respectively. In addition, the rotation speed servo signal is sent to a driver circuit system of the spindle motor 220, and a linear speed of a laser beam spot on a disc recording layer is controlled at a predetermined value.

The signal processing circuits 214 and 216 read record data or demodulate an address signal or the like. The demodulation method includes a slice system or a partial response maximum likelihood (PRML) system. The slice system includes: a method for binarizing a signal after linear waveform equalization has been carried out with respect to a reproduction signal and a method for binarizing a signal after equalization has been carried out by means of a nonlinear equalizer called a limit equalizer for limiting a high amplitude component in a low frequency area of a reproduction signal to a predetermined value. In addition, with respect to the PRML system as well, an optimal PR class, for example, PR (1,2,2,2,1) or PR (1,2,1), PR (1,2,2,1), PR (3,4,4,3) or the like can be selected in response to frequency characteristics of a reproduction signal.

The optical disc device 200 selects an optimal demodulating system (slice system or PRML system) in accordance with the optical disc 10 targeted for recording and reproducing operation and a size of a focus beam spot formed by the PUH 208.

The address signal processing circuit 216 processes a detected signal, thereby reading out "physical address information" indicating a recording location on an optical disc, and then, supplying the read out information to a controller 250. The controller 250 reads out data (such as user data) from a desired address location or record data to a desired address location, based on the address information. At this time, the record data is modulated into a recording waveform control signal suitable to optical disc recording by means of a recorded waveform circuit, although not shown, in a recording signal processing circuit 204 or a laser diode driver LDD (laser diode driver circuit) 206. Based on the thus modulated signal, the laser diode driver LDD 206 illuminates a laser diode, and then, records information in the optical disc 10 (information recording layer(s) of layer 0 and/or layer 1 shown in FIG. 4 or the like).

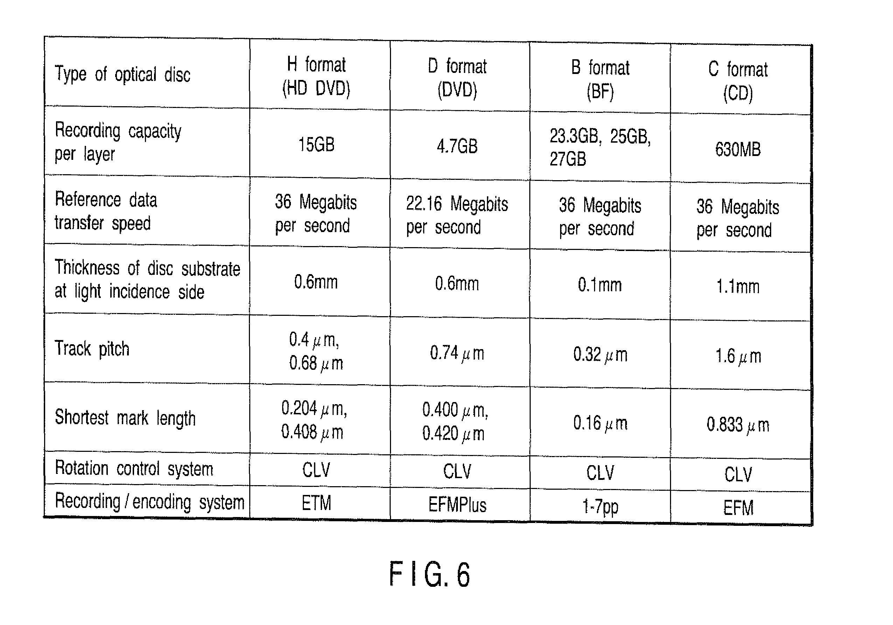

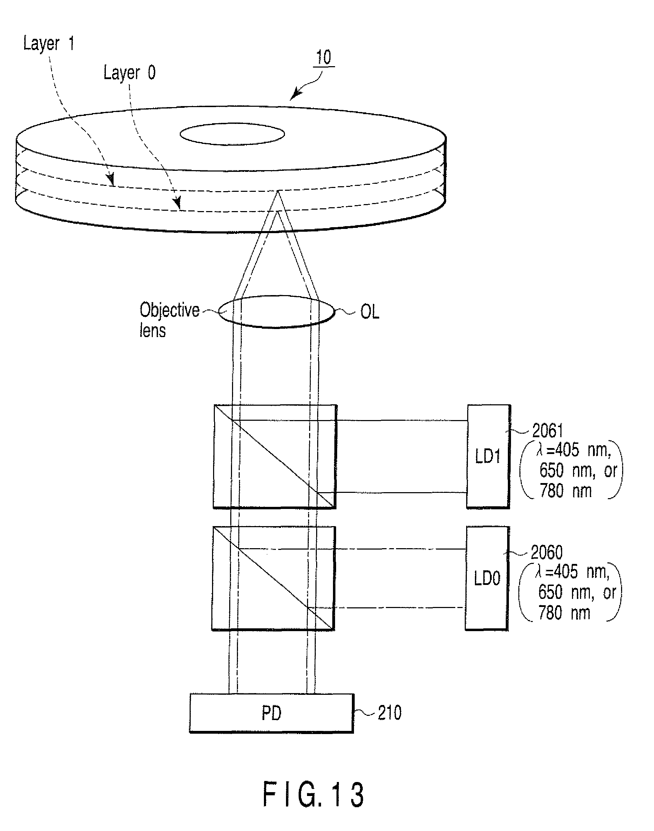

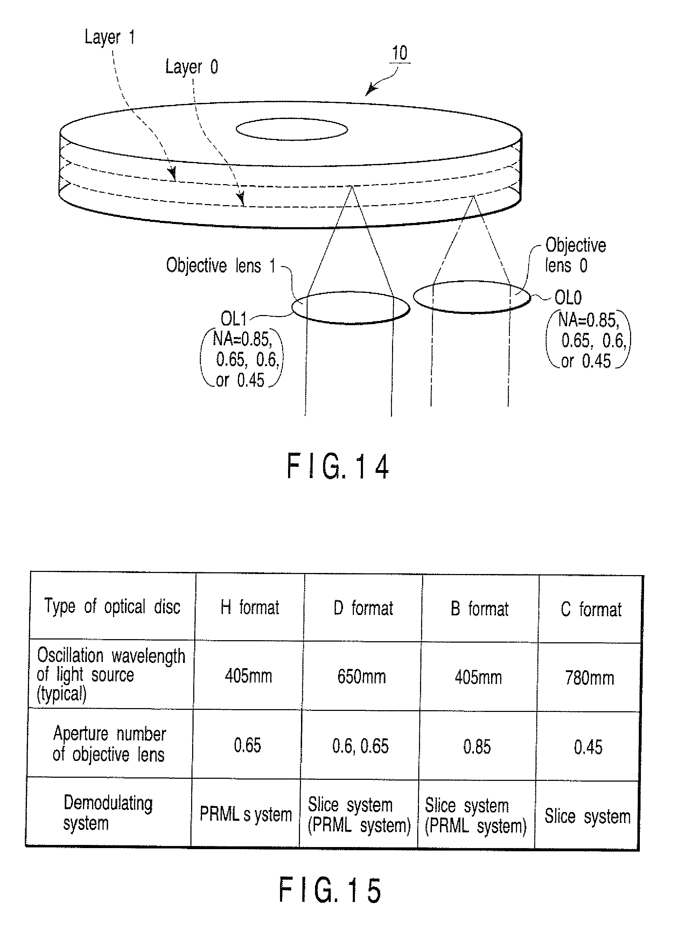

In the present embodiment, the optical head PUH 208 incorporates one of single wavelength light sources having any one of wavelengths 405±15 nm, 650±20 nm, and 780±30 nm or a plurality of single wavelength light sources (refer to FIG. 13 described later). In addition, an objective lens used for focusing coherent laser light beams having the above described wavelengths on a recording layer of the optical disc 10 by means of the optical head PUH 208 has an NA value of 0.65 indicating the number of apertures in the present embodiment. However, in another embodiment, in the case where recording/reproducing operation is carried out with respect to an information recording medium that conforms to an H format (a description is given later and reference is made to FIG. 6), an objective lens having an NA value of 0.65 is used. In the case where recording/reproducing operation is carried out with respect to an information recording medium that conforms to a B format (a description is given later and reference is made to FIG. 6), an objective lens having NA = 0.85 is used. In this manner, a structure can be provided such that an objective lens can be switched from another one (reference is made to FIG. 14 described later).

As an intensity distribution of incident light immediately preceding entry into an objective lens, a relative intensity at the periphery of an objective lens (in boundary location of an aperture portion) when a center intensity is defined as "1" is called "RIM Intensity". A value of the RIM Intensity in the H format is set within the range of 55% to 70%. A wavefront aberration quantity in the optical head at this time is optically designed so as to be a maximum of 0.33λ (0.33λ or less) with respect to a use wavelength λ.

### <Optical disc>

FIG. 4 is an exemplary view illustrating a general configuration of a disc shaped multi-layered information recording medium (multi-format disc) according to an embodiment of the present invention. This example shows a twin format optical disc (hereinafter, referred to as TF disc) having two information recording layers in particular from among multi-format discs. The TF disc has two information recording layers (layer 0 and layer 1), as shown in FIG. 4. These layers are composed of different formats, file systems, or applications or are composed of discontinuous logic spaces.

### <Layout of information area>

FIG. 5 is an exemplary view illustrating a layout example of layers of a twin format disc (TF disc). This example shows a case in which layer 0 (L0 has a D format (standard DVD) and layer 1 (L1) has an H format (high density HD DVD) as layer formats. Other examples can include combinations of a case in which layer 0 has a B format (BF) and layer 1 has a D format (standard DVD), a case in which layer 0 has a D format (standard DVD) and layer 1 and layer 2 has an H format (HD_DVD).

Here, an information area of HD DVD allocated in layer 1 is divided into a BCA (Burst cutting area)-H area; a System Lead-in area-H area; a Data Lead-in area-H area; Data area-H area; and a data Lead-out area-H area from the inner periphery side of the disc 10. In the BCA-H area, a BCA mark is recorded in advance due to a groove of a substrate of the disc 10, due to release of a reflection film, or due to a change of a recording medium. The BCA mark is modulated in a circumferential direction of the optical disc 10. This BCA mark is provided as a comb shaped mark on which identical items of information are arranged in a radial direction. A BCA code is recorded after modulated in accordance with an RZ modulation method. A pulse having a small pulse width (= low reflection factor) needs to be smaller than half of a channel clock width of the thus modulated BCA code. In addition, the BCA mark has the same shape in a radial direction, thus making it unnecessary to apply tracking and making it possible to reproduce information merely by applying a focus.

In the System Lead-in area-H area, information is recorded in emboss pits. This information is provided as management information contained in the optical disc 10 such as disc identification information or capacity of the Data area-H area. In addition, the shortest mark length of the emboss pit in this area is set at a value which is twice as much as that in the Data area-H area. As a result, while Data area-H in the H format (HD DVD) is reproduced by using the PRML system, in general, information can be demodulated even by using the slice system in the System Lead-in area-H area. As a result, with respect to readout of management information, compatibility with another format can be obtained. Thus, identification or the like of the disc 10 can be achieved at a high speed.

Data such as video image data or user data is recorded in the Data area-H area. In addition, in the Data Lead-in area-H area and the Data Lead-out area-H area, signals are recorded at a density equal to that in the Data area-H area. These areas are used as overrun areas for tracking servo or the like. In addition, in a write-once type optical disc and in a rewritable type optical disc, respectively, these areas each are used as a write-once or rewritable management information recording area.

An information area in the D format (standard DVD) allocated in layer 0 is divided into a Lead-in area-D area, a Data area-D area, and a Lead-out area-D area from the inner periphery side of the disc 10. A BCA area is not allocated in layer 0 because optical interference between layers is significant in the BCA area, thus avoiding adverse influence of the BCA mark in layer 0 on reproduction of the BCA mark in layer 1. Disc identification information is recorded in the BCA mark, thus making it necessary for the optical disc device 200 to first reproduce BCA information. In this manner, the BCA mark is not allocated in layer 0, whereby a TF disc can be recognized at a high speed and with high reliability.

Disc management information such as identification information on the disc 10 or capacity of the Data area-D area is recorded in the Lead-in area-D area. In addition, data such as video image data or user data is recorded in the Data area-D area. In the Lead-out area-D area, a signal is recorded at a density equal to that in the Data area-D area. This area is used as an overrun area for tracking servo or the like. In addition, in a write-once type optical disc and in a rewritable type optical disc, respectively, this area is used as a write-once or rewritable management information recording area.

Now, a description will be given with respect to a reflection factor of a twin format disc (TF disc) 10 according to the present embodiment. In the case where this TF disc 10 is monitored at a wavelength of 405 nm, reflection factors of layer 0 and layer 1 each are included in the range of 14% to 32%. On the other hand, in the case where the disc is monitored at a wavelength of 650 nm, the reflection factor of layer 0 is 40% or more, and the reflection factor of layer 1 is lower than 14%. As a result, in the case where reproducing operation is made at 650 nm, it becomes possible to ignore the layer of layer 1. Thus, an existing DVD device automatically leads a focus into only layer 0 that is a standard (non-HD) DVD.

### <Optical disc format>

FIG. 6 is an exemplary view illustrating an example of formats allocated in layers of a twin format disc (or multi-format disc). In each of the respective formats (H, D, B, and C formats) illustrated therein, there exist three types of a read-only type enabling only reproduction (ROM type), a write once type enabling only one information recording operation (±R type), and a rewritable type (±RW type or RAM type) enabling information rewriting. Here, CLV of a rotation control system is an acronym for Constant Linear Velocity, and denotes a rotation control method in which the velocity in a linear direction is maintained to be constant. In addition, ETM (Eight to Twelve Modulation) is provided as one modulation system, and is provided as a system for recording a signal by converting it into a 12-bit channel bit having redundancy for each 8 bit of information. By providing this redundancy, the reliability of information recording and reproducing operation is remarkably improved as compared with a case of directly recording an information bit in an optical disc. Similarly, EFM (Eight to Fourteen Modulation) is provided as a system for converting an 8-bit information bit into 14 bits, and LFMplus is provided as a system for converting an 8-bit information bit into 16 bits. In addition, 1-7pp (1-7 parity preserve) is provided as a conversion system for carrying out data conversion while a length of each data bit is restricted so as to be included between 2T being twice a basic channel length (T) and 8T being eight times thereof. Here, a D format indicates an already common standard DVD format, and a C format indicates physical specification that is identical to that of a CD format. On the other hand, an H format and a B format each are provided as a format example of a next generation high density optical disc that enables information recording/reproducing operation with higher density. In the present embodiment, the former (H format) is called HD DVD, and the latter (B format) is called BF.

### <Contents of information bit>

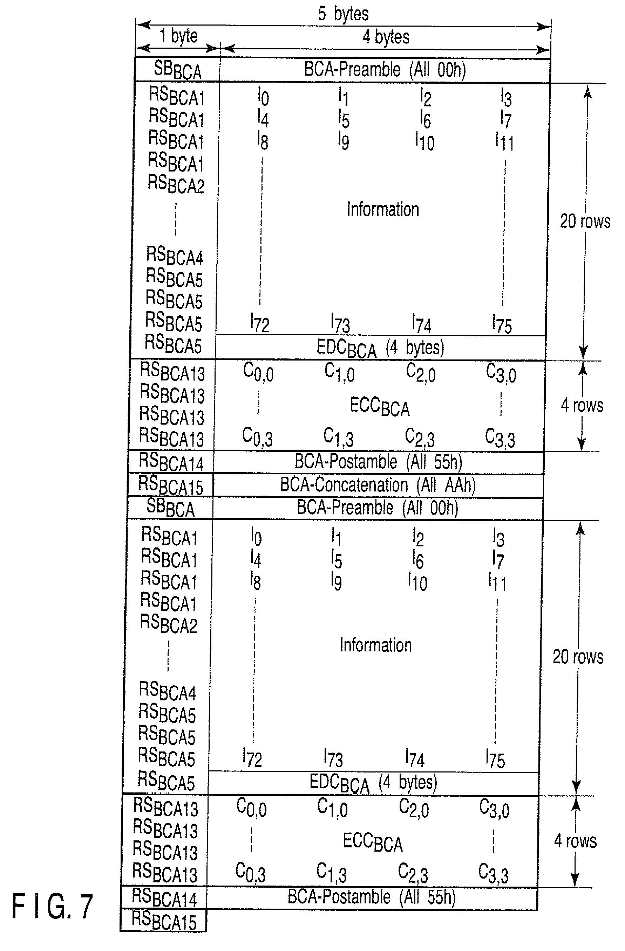

FIG. 7 is an exemplary view showing a configuration of information recorded in a burst cutting area (BCA) provided in layer 1 of a twin format disc (or multi-format disc). The BCA data shown in FIG. 7 has two BCA preambles, two post-ambles, and two BCA data areas (illustrated Information area). A BCA error detection code EDCBCA and a BCA error correction code FCCBCA are added to BCA data areas, and a BCA concatenation area (illustrated BCA - Concatenation area) is allocated therebetween.

Further, sync bytes SBBCA or re-sync bytes RSBCA on one by one byte basis are inserted into every 4 bytes. The BCA preamble comprises 4 bytes, and all "00h" are recorded. In addition, sync bytes SBBCA are allocated immediately preceding each BCA preamble. 76 bytes are set in a BCA data area BCAA. A BCA post-amble comprises 4 bytes, and all repetition patterns of "55h" are recorded. A BCA concatenation area comprises 4 bytes, and all "AAh" are repeatedly recorded.

FIG. 8 is an exemplary view illustrating an example of contents of information recorded in a burst cutting area (BCA). In a BCA data area (illustrated Information area) shown in FTG. 7, one or plural items of information are recorded while a BCA record is defined as one unit. For example, this record can include disc identification information or information for copy control. FIG. 8 shows an example of a BCA record that represents disc identification information. The first 2 bytes record a BCA record identifier representing what type of that BCA record (such as identification information or copy control information) is. Then, a version number of the BCA record indicating a format of the BCA record is recorded. Next, a data length for determining a size of the BCA record is recorded. A configuration can be provided so that this length does not include 4 bytes from a BCA record identifier that is a header of the BCA record to a data length. Next, a 1-byte book type and a disc type are recorded. The book type is provided as an identifier indicating a disc format and a read-only, write once, and rewritable types or the like.

FIG. 9 is an exemplary view illustrating a specific example of part (book type/disc type) of information recorded in a burst cutting area (BCA). As shown in FIG. 9, information is allocated on 1 by 1 bit basis in 4 bits of disc type from among an information byte of book type/disc type. The most significant bits in the disc type stores a mark polarity representing whether a reflection factor of a recording mark (bit) is higher or lower than that of a non-mark (pit). A next bit stores a TF flag indicating whether or not that disc is a twin format disc (TF disc).

Here, in the case where this TF flag is binary 0, it indicates that the disc is not a twin format disc. In the case of binary 1, it indicates that the disc is a twin format disc. As such an extension example, a multi-bit (2 or 3 bits) identifier is provided using next reserved bits, thereby making it possible to identify a multi-format optical disc having three layers or more.

By providing such a TF flag as a BCA record, it is possible to easily judge whether the disc conforms to only a single format or a multi-format disc in individual multi-layered discs.

FIG. 10 is an exemplary view illustrating a specific example of emboss pit information provided in a system lead-in area H of layer 1 in a twin format disc (or multi-format disc). In FIG. 10, book type/part version information is stored in the first byte location. The book type is provided as an identifier indicating a format of the disc 10 and a read-only type (ROM type), a write once type (±R type), a rewritable type (±RW type or RAM type) or the like. The part version is provided as version management information on that format. The disc size records information indicating a diameter of that disc 10. For example, 0000b is recorded for a 12 cm disc and 0001b is recorded for an 8 cm disc. A maximum transfer rate records a maximum transfer rate required to normally reproduce data recorded in a disc as required.

A disc structure stores information indicating the number of layers in that format, information indicating a polarity as to whether or not a track is oriented from the inner periphery side to the outer periphery side in each layer or vice versa; and information indicating that the layer is of a read-only type, of a write once type, or of a rewritable type. The number of layers used here denotes the number of layers in a format instead of the number of layers which the disc 10 physically has.

The recording density stores information indicating density and track pitches in a disc tangent direction. The data area allocation records a start address and an end address of Data area-H. The BCA descriptor records information indicating whether BCA exists or not. In addition, the extension part version records part version extension information. The maximum reading speed records a maximum linear speed required to normally read data recorded in a disc. Then, the layer format table records information described below.

FIG. 11 is an exemplary view illustrating a specific example of a layer format table included in part of the emboss bit information shown in FIG. 10. In this layer format table, the most significant 2 bits are allocated in a reserved area, the next 3 bits are allocated as a format identifier of layer 1, and the further 3 bits are allocated as a format identifier of layer 0. In this example, an HD DVD-ROM format is allocated to 000b of layer 1, and an HD DVD-ROM format is allocated to 000b of layer 0. In addition, a DVD-ROM format is allocated to 100b of layer 1. Here, instead of allocating a fixed format, a format indicated by a book type of that format may be allocated to 000b of layer 0 and/or layer 1. In addition, for example, in the case where a B format disc (refer to FIG. 6) is allocated in layer 0, a format identifier of layer 0 may be set to 010b or the like.

FIG. 12 is an exemplary view illustrating a specific example of emboss pit information provided in a lead-in area D of layer 0 of a twin format disc (or multi-format disc). The contents of bytes shown in FIG. 12 are basically identical to those of layer 1 shown in FIG. 10. However, with respect to the layer format table, a twin format disc descriptor is recorded in a byte location 128 instead of the table. In this example, in the case where the twin format disc descriptor is 00000000b, a format defined by a book type is indicated. In the case where the twin format disc descriptor is 10000000b, layer 0 is defined as DVD-ROM and layer 1 is defined as HD DVD-ROM. Here, as another example, in the case where a C format (refer to FIG. 6) is allocated in layer 1, the twin format disc descriptor may be set to 01000000b.

### <Switching reproduction light beams of optical disc device>

FIG. 13 is an exemplary view illustrating a general configuration of an optical system for recording or reproducing information to/from layers of a twin format disc (or multi-format disc) by using laser light beams.

One optical head (PUH) for irradiating two laser beams from laser diodes LD1 and LD2 to layers via one objective lens OL is used here. FIG. 14 is an exemplary view illustrating another example of a general configuration (single beam multi-optical head or multi-lens/multi-beam single optical head) of an optical system for recording or reproducing information to/from layers of a twin format disc (or multi-format disc) by using laser light beams. One (or two) optical heads (PUH) for irradiating two laser beams to layers separately via two objective lenses OL0 and OL1 is used here.

The twin format disc (TF disc) is formed in accordance with formats having different layers from each other. Thus, an optical disc device 200 enabling recording/reproducing operation in both layers (layer 0 and layer 1) has a function for properly switching a wavelength λ (such as 405 nm, 650 nm, and 780 nm) of laser diodes (LD1 and LD2), aperture number NA of objective lens (such as 0.45, 0.60, 0.65, and 0.85), and/or a demodulation system (such as PRML system and slice system) in accordance with the respective formats.

FIG. 15 is an exemplary view illustrating a specific example of specification (combination of laser wavelength, objective lens aperture number, and demodulation system or the like) of a disc device compatible with formats of a twin format disc (or multi-format disc). In switching a laser or the like, at the time of reading out management information or the like, an optical disc device can automatically switch the laser or the like as required and can switch it in accordance with a command from a host. FIG. 15 shows a parameter example of a format used in the disc 10 targeted for carrying out such automatic switching and the optical disc device 200 compatible with formats.

### <Configuration of information obtained from optical disc>

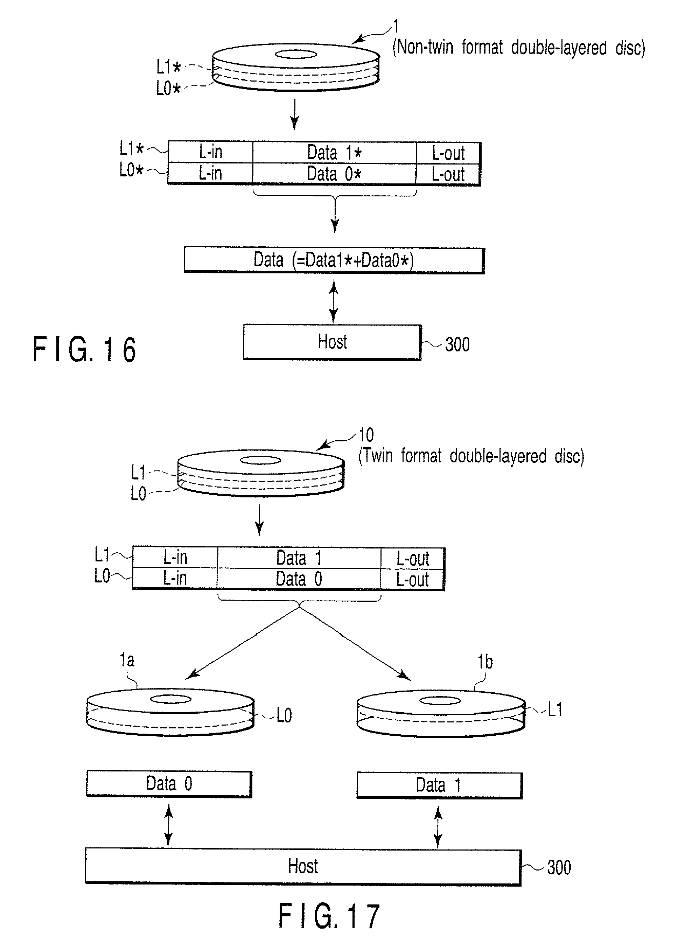

FIG. 16 is an exemplary view illustrating an example (dual layer disc which is not a twin format type) in which layers (L0* and L1*) are recorded in the same format, recording information (Data 0* and Data 1*) is physically divided into a plurality of layers, and recording information (Data 0* + Data 1*) is logically as one item of data. FIG. 16 shows a schematic view relating to exchange of information between the optical disc device 200 and the host device 300 in the case of reproducing the dual layer DVD-ROM disc which is not a twin format type. In the case of reproducing a dual layer DVD-ROM disc 1 which is not a twin format type, while physical sector numbers are allocated on a layer (L0* and L1*) by layer basis in the disc 1, the optical disc device 200 converts the sector numbers into a list of logical sectors of one row. In exchange of information with the host device 300, logical sector numbers are used. This system is featured in that there is no need for the host device 300 to discriminate whether or not "that disc has two layers or one layer" and in that processing is simple.

On the other hand, the host device 300 provides an access without considering whether information to be read out exists in layer 0 (L0*) or layer 1 (L1*). Thus, a command for carrying out data readout at a high speed while layers overlap many times may be sent to the optical disc device 200. In this case, there occurs a need for the optical disc device 200 to switch layers (L0* and L1*) frequently. There may even occur a case in which data cannot be transmitted within a time interval that the host device 300 requires. In this manner, in a system for reproducing a dual layer DVD-ROM disc, the host device 300 cannot recognize a relationship between a logical sector and a layer simply, thus making it difficult to avoid such a situation (a situation in which data cannot be transmitted within a required time interval).

Further, in the case where the above described system (FIG. 16) has been applied to a multi-format disc (refer to the disc 10 shown in FIG. 5 or 17), there is a need for the optical disc device 200 to switch a laser wavelength or lens in order to switch a layer (L0, L1) targeted for recording or reproducing operation. Thus, a probability that the above data transmission delay occurs becomes very high, and it becomes difficult to stably reproduce an optical disc. In addition, in the case where applications or the like are different from each other depending on layers (L0 and L1), while there is a case in which the host device 300 attempts to explicitly issue a command for providing an access to either of the layers, it is difficult to directly achieve this attempt in a conventional dual layer DVD-ROM disc system or the like.

FIG. 17 is an exemplary view illustrating an example in which recording information (Data 0 and Data 1) contained in layers (L0 and L1) is recorded in individual formats (may be identical to or different from each other) and recording information (Data 0 and Data 1) is physically and logically handled to be divided into a plurality of layers, i.e., an example (twin format dual layer disc 10) that physically corresponds to one dual layer disc and that logically corresponds to two individual single layer discs (virtual discs 1a and 1b). As an example, FIG. 17 shows a schematic view relating to exchange of information between the optical disc device 200 and the host device 300 in the case of reproducing a twin format disc.

At the time of reproducing a multi-format disc, the optical disc device 200 converts physical sector numbers of layers (L0 and L1) into logical sector numbers on a layer by layer basis or on a format by format basis. This optical disc device notifies to the host device 300 that a plurality of discs (physically one multi-format disc) have been virtually inserted into the optical disc device 200. In this example, this virtual disc is called a physical volume (simply referred to as PV). In addition, physical volume numbers (such as PV0 and PV1) are allocated to the physical volumes, respectively. For example, layer 0 (L0) is converted into physical volume 0 (PV0), and layer 1 (L1) is converted into physical volume 1 (PV1).

In this manner, a drive configuring the optical disc device 200 notifies that "two physical volumes virtually exist", thereby making it possible for the host device 300 to explicitly read out information from either of the physical volumes or instruct whether or not to explicitly switch a physical volume to be read out. In addition, it is estimated in advance to take a predetermined amount of time to switch a physical volume. Thus, there is an advantageous effect that a processing operation for operating an application can be carried out in consideration of that time. In addition, in the case where the host device 300 is merely compatible with only one or more of physical volume formats (H format and D format shown in FIG. 6, for example), the host device 300 does not recognize an incompatible physical volume (B format shown in FIG. 6, for example), making it possible to issue a readout command to only compatible physical volumes (H format and D format, for example).

### <State transition chart indicating transition of reproduction state of optical disc device>

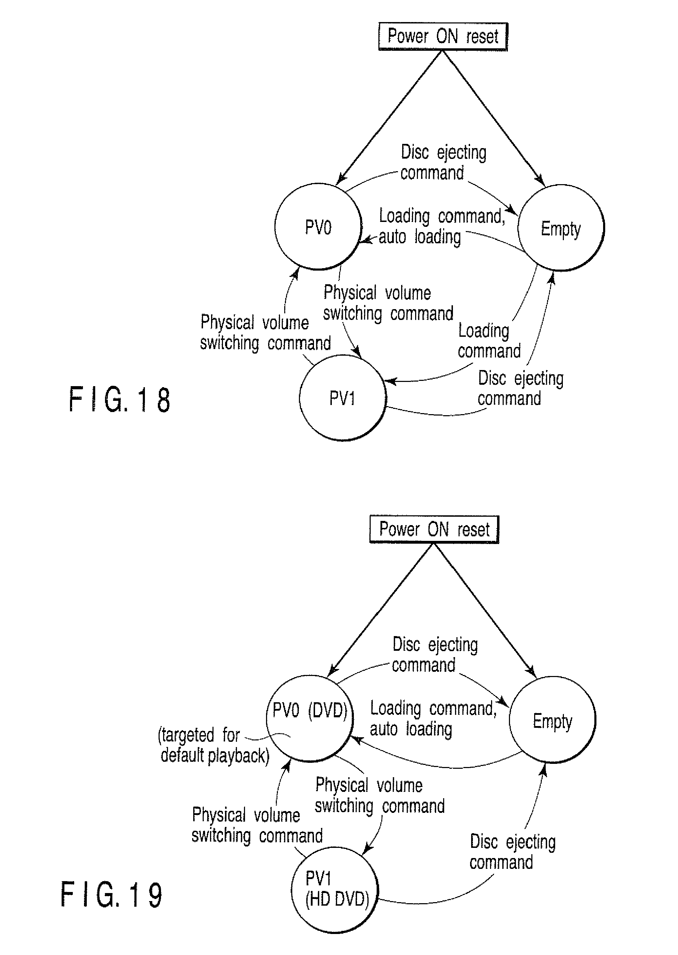

FIG. 18 is a state transition chart illustrating a transition (example 1) of a reproduction state in an optical disc device (disc drive). In the case where the optical disc device 200 is powered ON, the optical disc device 200 temporarily resets the setting of a recording/reproduction control program. Here, in the case where the optical disc 10 is not inserted into the optical disc device 200, the state of the disc in the optical disc device 200 enters an "empty" state. Here, in the case where the optical disc 10 has been inserted into the optical disc device 200, the optical disc device 200 starts loading of the optical disc 1.0 automatically or in accordance with a load command from the host device 300.

At this time, in the case where the loaded optical disc 10 has been a multi-format optical disc, the optical disc device 200 loads predetermined physical volume 0, and enters a state "PV0" that enables recording/reproducing operation of physical volume 0. On the other hand, when the optical disc 200 is powered ON, in the case where the optical disc 10 has already been inserted, loading of physical volume 0 is carried out immediately after resetting. Here, in the case where an eject button, although not shown, of the optical disc device 200 has been pressed or in the case where an eject command has been issued from the host device 300, the optical disc device 200 ejects the optical disc 10 to outside of the optical disc device 200, and the disc state in the optical disc device 200 reverts to "empty".

On the other hand, in the case where the host device 300 attempts to carry out recording/reproducing operation with respect to another physical volume, this host device 300 outputs a physical volume switching command to the optical disc device 200 in a state "PV0" in which physical volume 0 has been loaded. In accordance with this command, the optical disc device 200 switches a physical volume to be loaded. For example, this optical disc device 200 changes a state in a state "'PV1" in which physical volume 1 has been loaded. In this manner, the optical disc device 200 has a function for preferentially loading physical volume 0 as a default physical volume.

In addition, in the case where there are three or more physical volumes, only physical volume 0 is preferentially loaded. Physical volume 1 and physical volume 2 may be sequentially switched to each other. Alternatively, all switching operations from 0 to 1, 0 to 2, and 1 to 2 can be permitted. By preferentially providing physical volume in particular, for example, at the time of producing a boot disc of a multi-format optical disc, as long as a format used for booting is allocated to physical volume 0, there is no need for the host device 300 to make a search for a format used for booting, making it possible to recognize the format at the same time as when the disc 10 is inserted.

FIG. 19 is a state transition chart illustrating a transition (example 2) of a reproduction state in an optical disc device (disc drive) on which a twin format disc (TF disc) has been loaded. In the case of reproducing a TF disc in which layer 0 is DVD-ROM and layer 1 is HD DVD-ROM, the optical disc device 200 has a function for recognizing a DVD-ROM or a DVD video as physical volume 0 initially (by default). In this manner, even in the case where the optical disc device 200 according to the embodiment of the present invention is connected to the host device 300 comprising only a function for read-only commercially available DVD-ROM (DVD video), it becomes possible to normally reproduce only a DVD-ROM (DVD video) at the minimum.

### <Function possessed by optical disc device/host device>

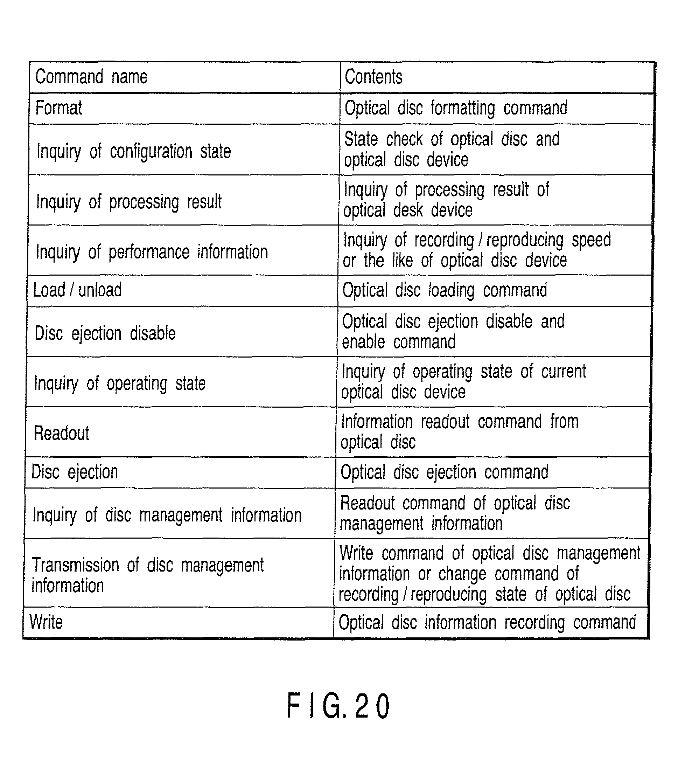

FIG. 20 is an exemplary view illustrating an example (a list of available commands) of commands possessed by an optical disc device (disc drive) that handles a twin format disc (or multi-format disc). An optical disc device has a function for, in the case where commands shown in a list of FIG. 20 (such as optical disc format command, optical disc management information readout command, optical disc management information write command, or optical disc recording/reproducing state change command) have been received from the host device 300, returning a response to the host device 300 in accordance with a predetermined format. In general, this processing function is packaged as firmware of the optical disc device 200. On the other hand, the host device 300 has a function for issuing a command to the optical disc device 200, and then, operating the optical disc device 200, in accordance with the predetermined format.

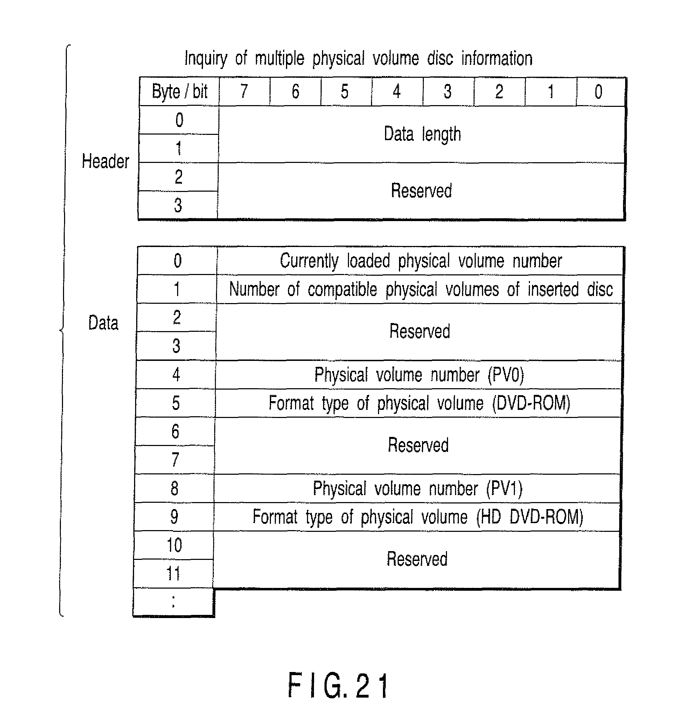

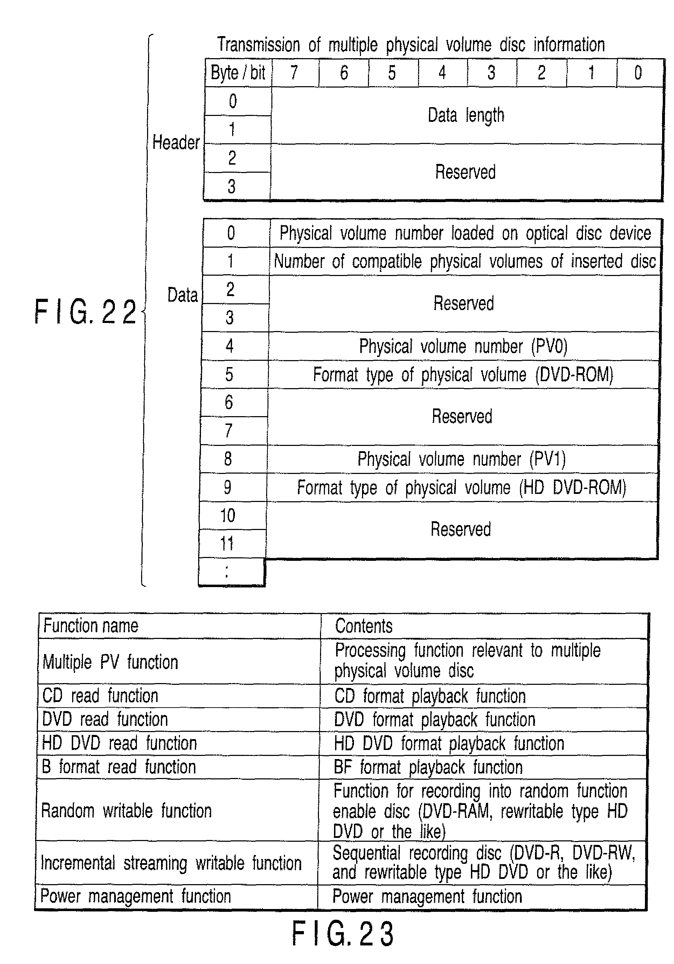

FIG. 21 is an exemplary view illustrating an example of a response format to inquiry of disc management information, used in an optical disc device (disc drive) that handles a twin format disc (or multi-format disc). FIG. 22 is an exemplary view illustrating an example of a format of transmitting disc management information, used in an optical disc device (disc drive) that handles a twin format disc (or multi-format disc). FIGS. 21 and 22 show a response format of "inquiring multiple physical volume disc information" that is a type of "inquiry of disc management information (refer to FIG. 20) and a format of "transmitting multiple physical volume disc information" that is a type of "transmission of disc management information (refer to FIG. 20)". In the case where a command of "transmitting multiple physical volume disc information" has been issued, the optical disc device 200 carries out loading of "physical volume number loaded on optical disc device". However, in the case where the optical disc device 200 does not correspond to that number or the optical disc 10 does not correspond thereto, the optical disc device 200 returns an error to the host device 300.

FIG. 23 is an exemplary view illustrating an example of functions (a list of applicable functions) possessed by an optical disc device (disc drive) that handles a twin format disc (or multi-format disc). Numbers are defined in advance for these functions that the optical disc device 200 has (processing function for multiple physical volume disc, DVD format playback function, HD DVD format playback function, BF format playback function, function for recording into random function enabling disc (such as DVD-RAM, rewritable type HD DVD), function for recording into sequential recording disc (such as DVD-R/-RW and HD DVD-R/-RW), and power management function or the like). The optical disc device 200 has a function for returning a list of commands available to the optical disc device 200 in response to inquiry from the host device 300. This function is mainly packaged as firmware of the optical disc device 200.

### <Response to configuration state inquiry>

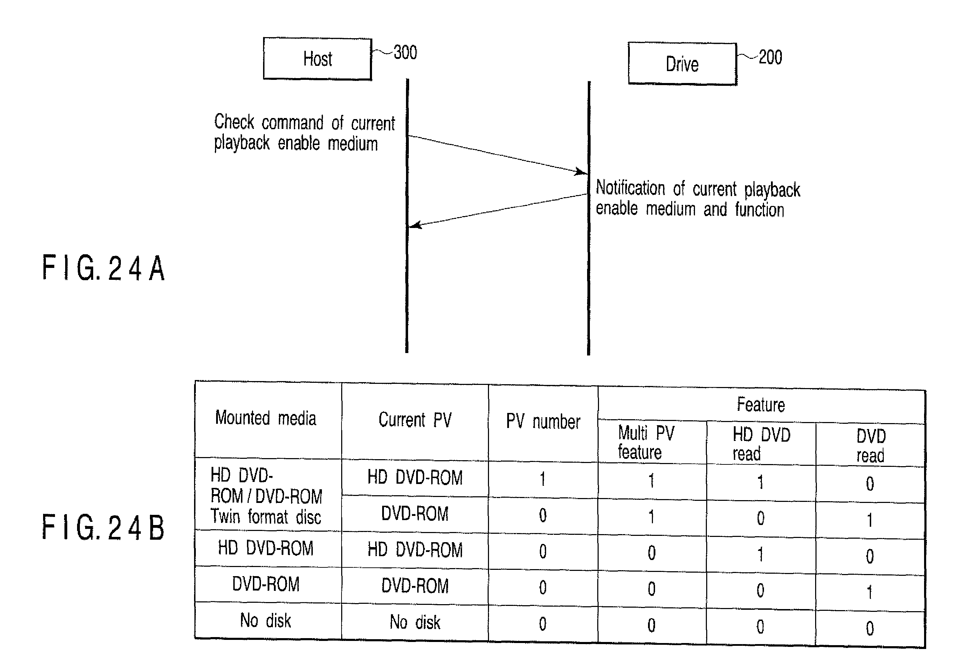

FIGS. 24A and 24B are views each illustrating an example of response of an optical disc device (disc drive) that handles a twin format disc (or multi-format disc) in the case where inquiry of a configuration state has been issued from a host. In the case where a configuration state acquiring command has been issued from the host device 300, the optical disc device 200 returns a list of functions available to the device itself (refer to FIG. 23) to the host device 300 (refer to FIG. 24A). Further, the optical disc device 200 sets a flag indicating a current state in response to a state of medium loaded at that time, as shown in FIG. 24B. For example, in the case where the optical disc device 200 has a multiple PV function (processing function for multiple physical volume disc), and a twin format disc (TF disc) has been loaded as an optical disc 10, "1" is set at a multiple PV flag. In addition, if a function relating to a physical volume PV mounted at that time point, for example, HD DVD-ROM has been mounted, "1" is set at an HD DVD-ROM read flag. At this time, a flag is set to "0" with respect to a function relating to PV that is not loaded.

The optical disc device 200 has a function for carrying out such a response, whereby the host device 300 can judge instantly that the disc 10 inserted into the optical disc device 200 is a multi-format optical disc and what a currently loaded format is. If the host device 300 is compatible with reproduction of a multi-format optical disc, it becomes possible to load a preferred physical volume by issuing a command for switching physical volume PV. In addition, after a desired physical volume has been temporarily loaded, information recording/reproducing operation relevant to the optical disc 10 can be smoothly carried out by issuing only a command compatible with respective formats.

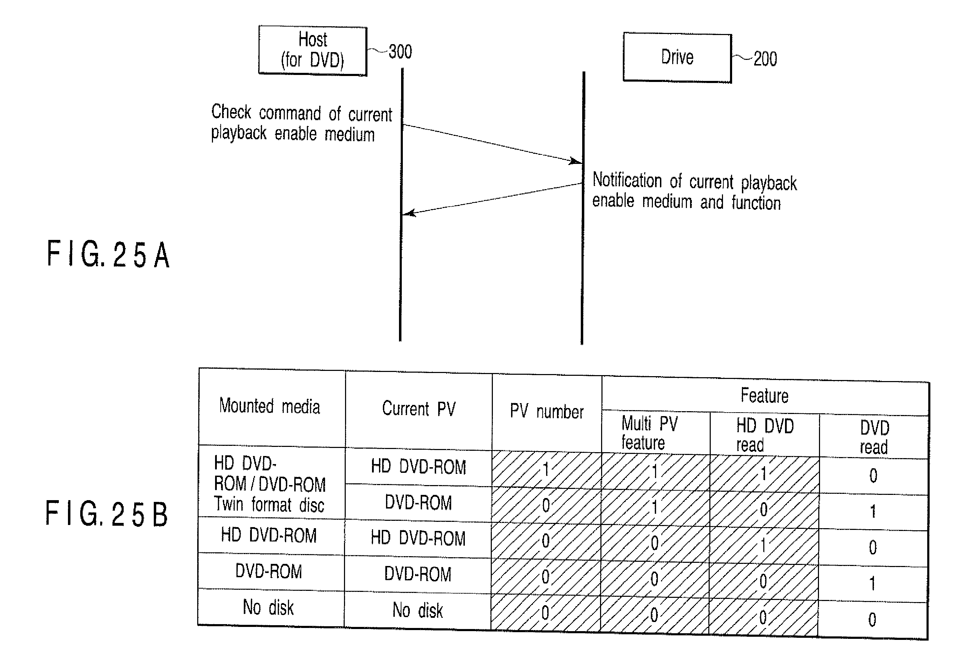

FIGS. 25A and 25B are views each illustrating an example of response of an optical disc device (disc drive) that handles a twin format disc (or multi-format disc) in the case where inquiry of a configuration state has been issued from a host compatible with only DVD reproduction. In FIG. 25B, a shaded portion denotes a portion which a host device 300 compatible with only DVD reproduction does not recognize. The host device 300 does not make recognition of HD DVD, and thus, all of the commands associated with a function or a disc relevant to HD DVD are ignored. However, according to a response from the optical disc device 200, the host device 300 can judge that DVD-ROM is loaded in the case where a DVD-ROM disc has been inserted. In addition, in the case where a TF disc has been inserted, the optical disc device 200 first loads DVD-ROM of physical volume 0. Thus, the host device 300 recognizes that DVD-ROM has been loaded, making it possible to reproduce DVD-ROM smoothly without any problem. On the other hand, in the case where HD DVD-ROM has been inserted, it is determined that the disc 10 does not exist in drive or that the disc 10 other than DVD-ROM has been inserted into drive. In this way, the optical disc device 200 according to the embodiment of the present invention has a feature that the disc device operates smoothly without any problem with respect to the host device 300 commercially available.

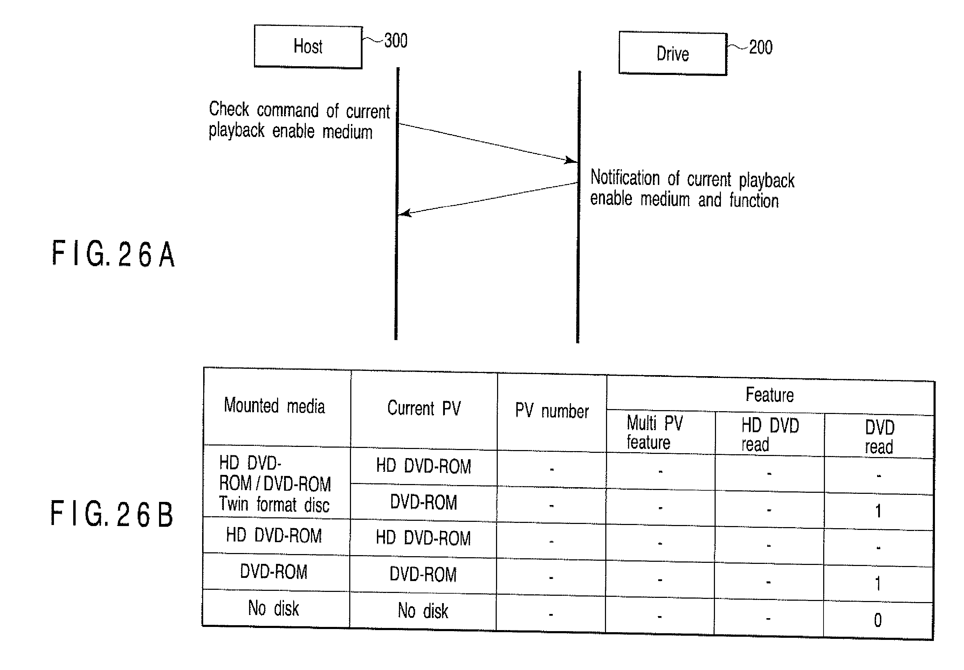

FIGS. 26A and 26B are views each illustrating an example of response of an optical disc device (disc drive) "compatible with only general DVD", which cannot handle a twin format disc (or multi-format disc) in the case where inquiry of a configuration state has been issued from the host. In FIG. 26B, a multiple PV flag and an HD DVD read flag are assigned to reserved bits in a device compatible with only DVD. Further, the optical disc device 200 does not have a reproduction function of HD DVD-ROM, and thus, this disc device does not return this flag. Based on this response, the host device 300 can check that the optical disc device 200 during communication does not have a function for reproducing a TF disc.

### <Default PV switching function>

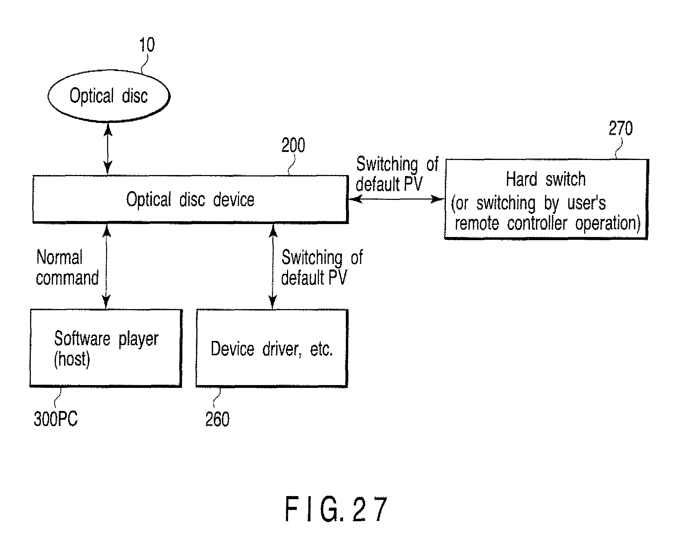

FIG. 27 is an exemplary view illustrating an optical disc device (disc drive) that has a function for switching a default physical volume. Up to now, a description has been given such that, in the optical disc device 200, physical volume 0 is preferentially loaded as a default physical volume. However, depending on type of the host device 300, there is a need for switching a default physical volume or there is a case in which a format set to physical volume 0 may be switched. For example, in the case of the host device 300 compatible with only HD DVD, when the DVD disc 10 is first loaded, there occurs a need for switching a physical volume from DVD to HD DVD prior to recording and reproducing operation every time. The optical disc device 200 shown in FIG. 27 has: a function for, apart from a host device 300PC (or 300), receiving a command from a hardware switch 270 (including a switching command by a remote controller operation from a user) or a device driver software 260, and then, switching a default physical volume; and a function for switching a format loaded in each physical volume. In this manner, the optical disc device 200 shown in FIG. 27 can be compatible with various types of host device 300PC (or 300).

### <Flow chart of disc recognition>

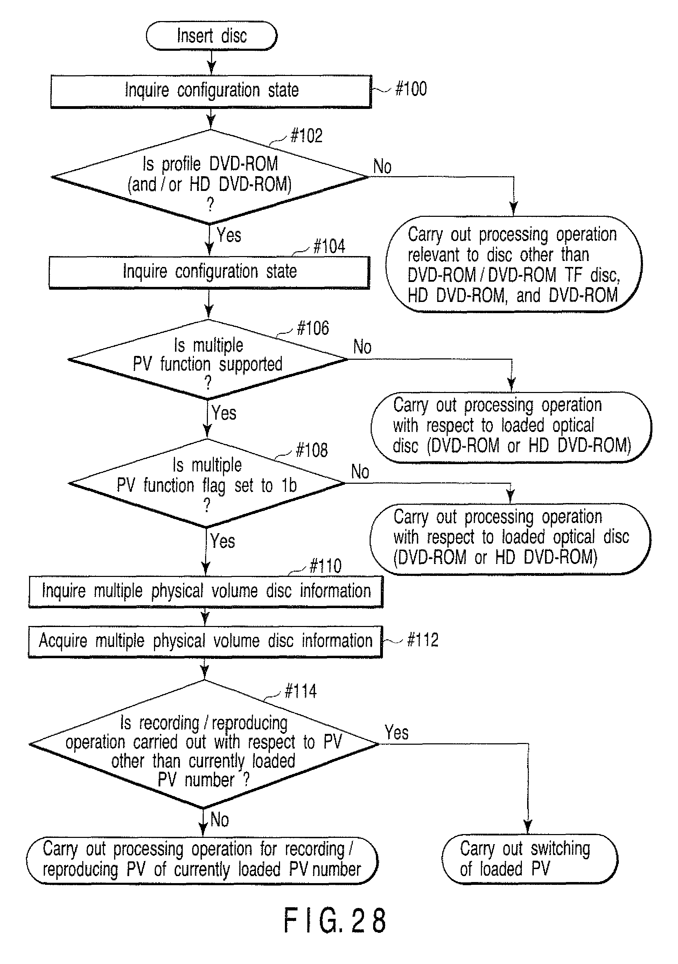

FIG. 28 is a flow chart illustrating an example of a method for reproducing a multi-format disc (twin format disc). This example shows a processing operation viewed from the host device 300 in the case of reproducing a multi-format optical disc 10. Here, a description will be given with respect to a case in which a TF disc including DVD-ROM and HD DVD-ROM or DVD-ROM, HD DVD-ROM or other disc has been inserted as a multi-format optical disc 10.

After the corresponding optical disc device 200 has been powered ON, the host device 300 periodically executes a check of whether or not the disc 10 is inserted. Here, after confirming that the disc 10 has been inserted into the optical disc device 200, the host device 300 issues "configuration state inquiry (refer to FIG. 20)" (block #100), and checks a list name (profile: refer to FIG. 23) of functions available to the optical disc 10 and the optical disc device 200 at a current time point.

Here, in the case where there does not occur a response of profile that handles DVD-ROM and/or HD DVD-ROM (block #102: No), it is determined that a disc 10 other than a TF disc, DVD-ROM, or HD DVD-ROM has been currently inserted into the optical disc device 200, and a current processing operation moves to another processing operation. In the case where a response has been a profile that handles DVD-ROM and/or HD DVD-ROM (block #102: Yes), "a configuration state inquiry" is issued again (block #104), and detailed function information is acquired. Here, in the case where a multiple PV flag has not been returned (block #106: No), it is determined that the optical disc device 200 during communication does not have a function for reproducing a multi-format optical disc, and a current processing operation moves to a processing operation for reproducing one format (for example, DVD-ROM) currently loaded. In this case, the host device 300 issues only a valid command to DVD-ROM.

On the other hand, in the case where a multiple PV flag has been returned (block #106: Yes), the host device 300 checks the contents of that flag bit. In the case where the flag bit has been set to 0b (block #108: No), it is determined that the inserted disc 10 is not a multi-format optical disc, and a current processing operation moves to a processing operation for reproducing one format currently loaded. In the case where the flag bit has been set to 1b (block #108: Yes), the host judges that the inserted disc is a multi-format optical disc.

Then, the host device 300 issues a command for inquiring disc management information (block #110). Then, a drive of the optical disc device 200 notifies: the number of physical volumes of the inserted optical disc 10; type of format of the respective physical volumes; and the currently loaded physical volume number (block #112). Immediately after the disc 10 has been inserted, the format of physical volume 0 is loaded. If a user's reproduction request is made or if a format defined so that the host device 300 carries out recording/reproducing operation has been loaded in advance (block #114: No), the host device 300 issues a command to that format, and starts recording and reproducing operation of an optical disc. On the other hand, in the case where the format has been a format different from that of the user's request (block #114: Yes), the host device 300 starts switching of a physical volume.

Here, for example, consider a case in which the host device 300 (or 300PC) is an HD DVD-ROM compatible software player or hardware player. In general, in the case where the user has inserted a TF disc of HD DVD-ROM/DVD-ROM, there is often a case in which an attempt is made to preferentially reproduce HD DVD-ROM containing a large amount of information. Therefore, while a drive of the optical disc device 200 first loads DVD-ROM that is a default physical volume, the host device 300 can be configured so as to have a function for switching to HD DVD-ROM a physical volume loaded immediately after acquisition of multiple physical volume disc information, and then, notifying to the user a result of reproduction of HD DVD-ROM. By doing this, it becomes possible to show the user as if HD DVD-ROM were preferentially reproduced.

In this manner, in the host device 300 according to an embodiment of the present invention, it is possible to set a default physical volume apart from the optical disc device 200. In addition, this host device 300 has a function for switching this default physical volume in response to the user's request. In the case where the host device 300 is a PC, this volume switching function is packaged as application software, and the function is presented to the user as a software button. In addition, in the case where the host device 300 is a recorder or a player, this volume switching function is packaged as firmware of the optical disc device 200, and the function is presented to the user as a switch display using an on-screen display.

### <Flow chart of switching physical volume>

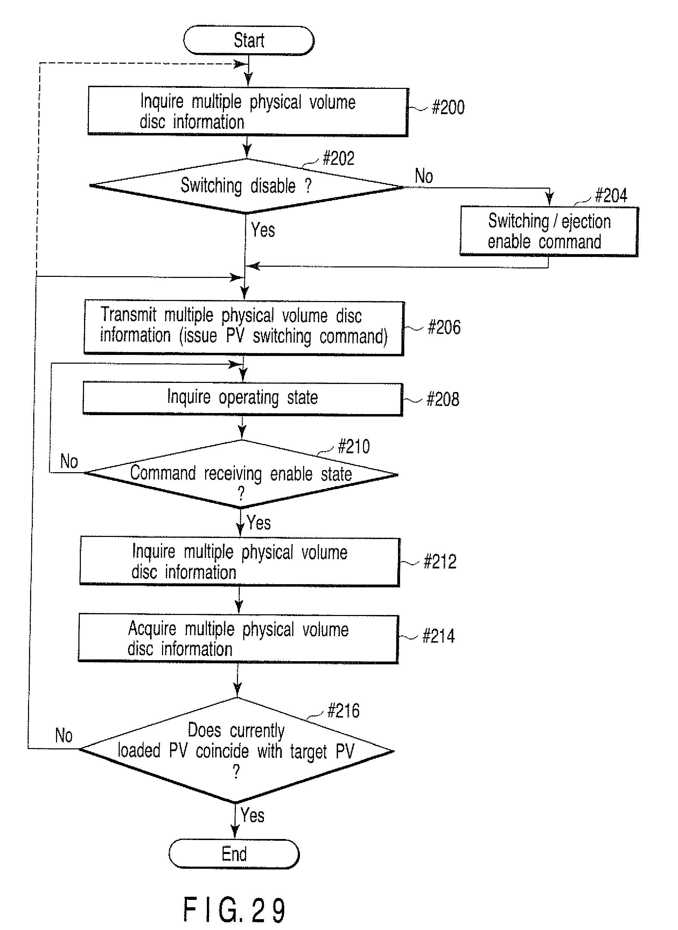

FIG. 29 is a flow chart illustrating an example of a method for switching a physical volume in a multi-format disc (twin format disc). This example shows a flow chart of an operation for switching a physical volume of a multi-format optical disc viewed from the host device 300. Prior to switching, the host device 300 carries out inquiry of multiple physical volume disc information to the optical disc device 200 (block #200). Then, the number of physical volumes; type of format of the physical volumes; and the currently loaded physical volume number are checked (block #112). Next, in the case where a state of the optical disc device 200 is not a physical volume switching disable state (block #202: No), a switching/ejection enable command is used to switch the state of the optical disc device 200 to a switching enable state (block #204). After block #204 or where the state of the optical disc device 200 has been set at a physical volume switching disable state (block #202: Yes), multiple physical volume disc information transmission is used to issue a command for switching a loading operation into a desired physical volume (block #206).

Next, the host device 300 periodically carries out inquiry of an operating state (block #208). At this time, while the optical disc device 200 switches a physical volume to be loaded in accordance with a command from the host device 300, a predetermined amount of time for switching a laser diode (LD) or re-leading of a focus servo or a tracking servo or the like is required for this switching operation. In this duration, the optical disc device 200 notifies that the disc device is in operation in response to inquiry from the host device 300. While the host device 300 makes periodic inquiry, the host waits until a response from the optical disc device 200 is set in a "command receiving enable state" (Loop of "No" in block #210). When command receiving is enabled (block #210: Yes), inquiry of multiple physical volume disc information is carried out (block #212), and then, a currently loaded multiple physical volume is checked (block #214). When the number and type of the currently loaded multiple physical volume coincide with the target (block #216: Yes), the switching of the physical volume is completed. In the case where coincidence with the target is not obtained (block #216: No), a processing operation for multiple physical volume information acquisition (block #200) or switching command (block #206) is carried out again.

### <Flow chart of drive operation>

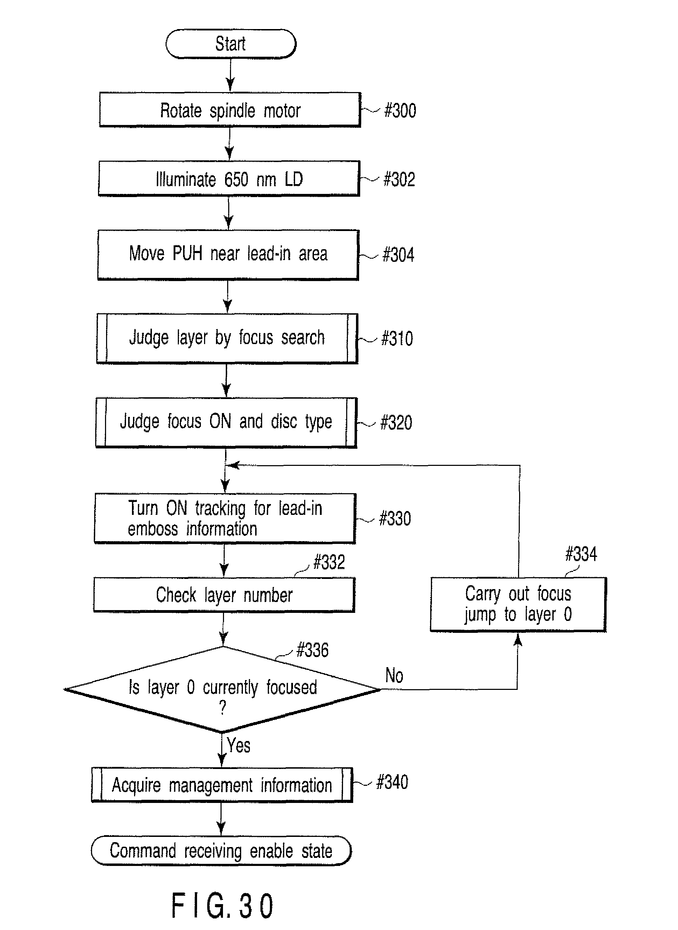

FIG. 30 is a flow chart illustrating an example in the case where an optical disc device (disc drive) carries out loading of a physical volume of a multi-format disc (twin format disc). In this example, in the case where the optical disc 10 has been inserted, the optical disc device 200 starts rotation of the spindle motor 220 (block #300), and then, illaminates a laser diode (LD) (block #302). Here, for example, in the case of the optical disc device 200 using an LD which has each of wavelengths of 405 nm, 650 nm, and 780 nm, the wavelength of 650 nm is selected. This is because, in the case of reproducing a DVD-R disc at the wavelength of 405 nm, an optical focus spot becomes smaller than the wavelength of 650 nm and energy density increases, and thus, there is a danger that already record data is destroyed.

The optical disc device 200 then carries out feeding of an optical head (PUH), and moves the PUH actuator 208 to the inner periphery side of the disc 10 (block #304). Next, the PUH actuator 208 is moved vertically in a focus direction, and a layer judgment is carried out (block #310). After the layer judgment has terminated, a focus is turned ON. Then, a type of the disc 10 is judged in accordance with the frequency characteristics of a tracking signal, a BCA signal, and an RF signal or the presence or absence of these signals (block #320). Based on a result of the judgment, a focus is led into layer 0.

Next, depending on a type of the judged disc, a tracking system and a servo gain are optimized, tracking is carried out for a lead-in area (block #330), and then, recorded information is obtained (block #332). Here, the optical disc device 200 checks that layer 0 is reproduced in accordance with ID information and physical address information or the like of the optical disc 10 (block #336: Yes), and then, carries out acquisition of further detailed management information (block #340). Then, optical disc loading is completed.

At this time, in the case where the disc 10 being reproduced is a TF disc as shown in FIG. 5, a format of layer 0 of a disc to be reproduced and a format of layer 1 can be checked based on a twin format disc descriptor and book type or part version information. At this time point, the optical disc device 200 enters a state in which a multiple PV flag, an HD DVD read flag, and a DVD read flag can be returned in response to a configuration state inquiry or the like from the host device 300. In the case where a layer having led a focus is not layer 0 (block #336: No), a focus jump is carried out (block #334), and focus leading into layer 0 is carried out.

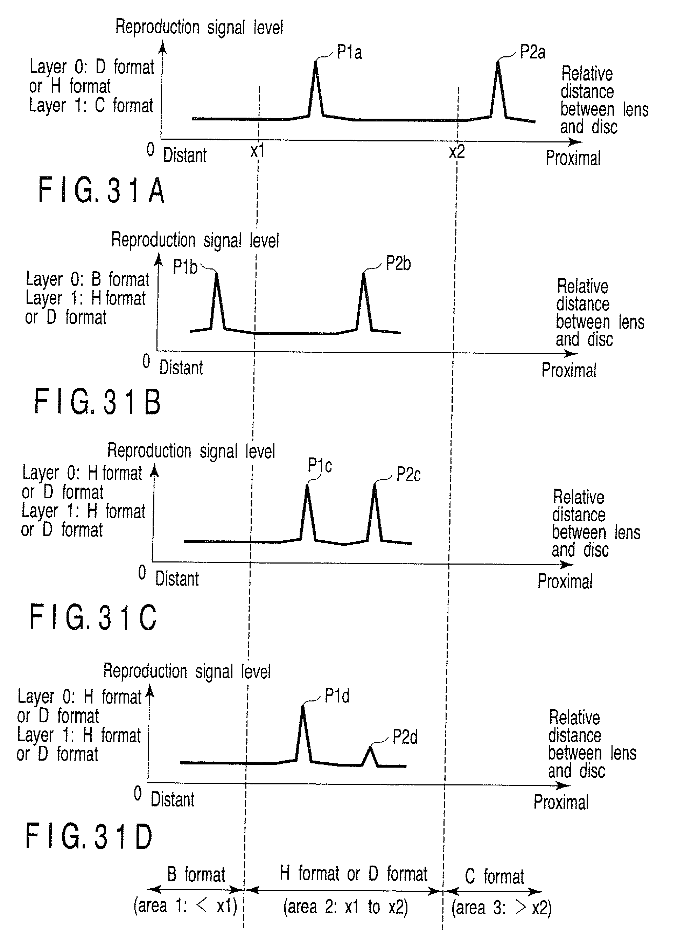

FIGS. 31A to 31D show a flow illustrating an example of a layer judging method in a multi-format disc (twin format disc). Now, a detailed description will be given with respect to a layer judgment using a focus search. In the case where an objective lens OL of the PUH 208 is made close to the optical disc 10, if a reproduction signal is monitored, signals as shown in FIGS. 31A to 31D can be obtained. The reproduction signal increases when a focus is adjusted to an information recording layer of the optical disc 10. Thus, a disc type can be judged based on locations (Pla to P1d and P2a to P2d) and intensity (relative scale of signal level) of the signal peaks.

That is, when a focus search is advanced from a location of a laser light beam receiving face (disc substrate surface) of the optical disc 10 to the inside of the disc, an information recording layer of a B format (refer to FIG. 6) in which substrate thickness at a light incidence side is thinnest (0.1 mm) is present in the most frontal location (at the light receiving face side of optical disc), and thus, this format first has a peak (refer to P1b of area 1 shown in FIG. 31B). Next, the HD DVD format and the DVD format each have a peak in identical location (location in the order of 0.6 mm from substrate surface) (refer to area 2 shown in FIGS. 31C and 31D). A CD format has a peak in location that is the most distant from a substrate at the light incidence side (1.0 mm to 1.2 mm) (refer to Pla of area 3 shown in FIG. 31A). Therefore, in location having a peak of the CD format, an objective lens becomes the closest to a substrate surface of the disc.

Further, in the case where a dual layer disc of a DVD format has been reproduced by an LD having a wavelength of 650 nm, the peaks of layers are substantially equal to each other (refer to P1c and P2c of area 2 shown in FIG. 31C). In the case where a TF disc shown in FIG. 5 or 17 has been reproduced by an LD having a wavelength of 650 nm or in the case where two layers of an HD DVD-ROM has been reproduced, the peak levels of the layers become unbalanced due to an effect of a medium material for the layers (refer to P1d and P2d of area 2 shown in FIG. 31D). Unbalanced peaks in reproduction level are produced because a dual layer/twin disc designed for a 405 nm laser is subjected to focus search by 650 nm laser. In the case of using the 405 nm laser, unbalanced peaks cannot be substantially produced. Although an example of using a 650 nm laser has been shown here, this example does not show that the 405 nm laser cannot be used.

In examples shown in FIGS. 31A to 31D, from such a result, in the case where two peaks in reproduction signal level are included in area 2 shown in FIGS. 31A to 31D (a distance from a light receiving face of the disc 10 is between x1 and x2. For example, 600±50 µm are defined as x1 to x2 in distance from a disc substrate surface.), it is determined that the disc is any one of the TF disc, HD DVD disc, and DVD disc. Here, in the case where two peaks are produced in area 2, whether or not the disc is the TF disc can be judged depending on whether or not two peak levels are substantially equal to or are different from each other by a predetermined degree or more. In addition, in the case where two peaks in reproduction signal level are present in different areas (FIG. 31A or 31B), the current step moves to the step of carrying out switching of an LD (switching into another wavelength laser) or switching of an objective lens (switching into another aperture number).

Now, a description will be given with respect to the step of judging a disc type. In this step, a focus is lead into the optical disc 10, and the type of the optical disc 10 is judged based on that reproduction signal. Here, in the case of illuminating a 650 nm LD, a focus is carried out in layer 0, and it is determined whether layer 0 is DVD or HD DVD depending on the presence or absence of a tracking signal, the presence or absence of BCA information, and the presence or absence of an RF signal. In the case where the layer is DVD, the current step moves to the step of turning ON tracking relevant to next lead-in emboss information. In addition, in the case where it has been judged that the layer is not DVD, the current step moves to the step of carrying out switching of an LD or an objective lens.

### <Summary of the embodiments>

A disc has a lead-in area at an inner periphery portion of the disc, and has a plurality of information recording layers between the inner periphery portion and an outer periphery portion of the disc. The lead-in area includes information (layer format table) indicating a format of each of a plurality of information recording layers (layer 1 and layer 0), and identifies a type (such as HD DVD-ROM format or DVD-ROM format) of a format used in each of the plurality of information recording layers (layer 0 and layer 1) in accordance with information indicating each of the formats (format of layer 1 and format of layer 0). As a result, recording or reproducing operation can be made while the format of each layer is recognized with respect to a multi-layered disc in which plural types of information can be recorded in a plurality of recording layers in accordance with different formats.

The multi-format disc 10 according to an embodiment of the present invention includes a first layer (L0) for recording first data (Data 0) and a second layer (L1) for recording second data (Data 1) sequentially from the side close to the light receiving face of the optical disc 10 by way of example of a twin format disc (TF disc). Types of formats used here include a first format (for example, HD DVD-ROM format) and a second format (for example, DVD-ROM format). Information indicating formats (format information on layer 1 and format information on layer 0) includes a first information bit (000b shown in FIG. 11) indicating a first format (HD DVD-ROM format) and a second information bit (100b shown in FIG. 11) indicating a second format (DVD-ROM format). The first information bit (000b shown in FIG. 11) can indicate that the first data (Data 0) of the first layer (L0) conforms to either the first format (HD DVD-ROM format) or the second format (DVD-ROM format), and the second information bit (100b shown in FIG. 11) can indicate that the second data (Data 1) of the second layer (L1) conforms to either the first format (HD DVD-ROM format) or the second format (DVD-ROM format).

Here, a lead-in area (lead-in area D shown in FIG. 5) in the first layer (L0) can include information (twin format flag shown in FIG. 12) indicating a case in which formats of the plurality of information recording layers (layer 1 and layer 0) are different from each other, and a lead-in area (lead-in area H shown in FIG. 5) in the second layer (L1) can include information (layer format table shown in FIG. 11) indicating formats of a plurality of information recording layers (layer 1 and layer 0).

Further, when a reproduction signal level obtained via an optical head (PUH) is represented by variable P, a reproduction signal level from the first layer (L0) is denoted by P1, and a reproduction signal level from the second layer (L1) is denoted by P2. In addition, while a light receiving face location of an optical disc is defined as a reference, when a relative distance from a light receiving face of an optical disc to a focal location of an optical head is represented by variable "x", and then, two different predetermined variables x1 and x2 are defined, a combination state of the first format (for example, HD DVD-ROM format) and a second format (for example, DVD-ROM format) in an optical disc can be judged depending on whether or not the reproduction signal levels P1 and/or P2 are (is) between x1 and x2 (refer to FIGS. 31A to 31D).

Further, in the case where the reproduction signal levels P1 and P2 are between x1 and x2, format types of the first layer (L0) and the second layer (L1) can be discriminated depending on whether or not the reproduction signal level P1 is obtained as a signal level different from the reproduction signal level P2 (refer to FIGS. 31C and 31D. For example, P1c ÷ P2c in DVD dual layer format; and P1d > P2d in HD DVD dual layer format).

In an information recording medium recording/reproducing method for recording/reproducing information with respect to a multi-layered information recording medium (reference numeral 10 in FIG. 17, for example) having a plurality of information recording layers (L0 and L1), and then, transmitting/receiving information between the host device 300 and an information recording medium, information recorded in the multi-layered information recording medium is divided into a plurality of information (data 0 and data 1), whereby transmission/receiving of information (data 0 and 1) contained in the host device 300 and the information recording medium can be carried out while the plurality of information are defined as information contained in a plurality of media (1a and 1b).

In addition, in an information recording medium recording/reproducing method for recording/reproducing information with respect to a multi-layered information recording medium (reference numeral 10 in FIG. 4, for example) having a plurality of information recording layers (L0 and L1), and then, transmitting/receiving information between the host device 300 and an information recording medium, it is possible to execute a first step of acquiring format information (refer to FIG. 6) contained in all information recording layers possessed by the information recording medium from one or more of information recording layers (for example, BCA-H, System Lead-in area-H, and Data Lead-in area-H of L1 shown in FIG. 5); a second step of notifying the acquired format information to the host device 300 as information contained in a plurality of virtual media (information on PV0 and PV1); and a step of, after terminating the first and second steps, first starting recording/reproducing operation of such one information recording layer (L1) after there has been issued a command for recording and reproducing information with respect to an information recording layer (L0) other than such one information recording layer (L1) in which readout is currently carried out from such host device 300.

In addition, in an information recording medium recording/reproducing method for recording/reproducing information with respect to a multi-layered information recording medium (reference numeral 10) having a plurality of information recording layers (L0 and L1), and then, transmitting/receiving information between the host device 300 and an information recording medium, in the case where one of a plurality of information recording layers conforms to a commercially available format (for example, DVD video), and the other one conforms to a format (for example, HD DVD) available later than the commercially available format, a layer in which information is read out in the step of acquiring format information (FIG. 6) contained in all information recording layers possessed by the information recording medium can conform to the commercially available format (DVD video).

Further, in an information management method for managing information by (a host) transmitting/receiving information between an information recording medium recording/reproducing apparatus 200 and an information recording medium, the recording/reproducing apparatus recording/reproducing information with respect to a multi-layered information recording medium 10 having a plurality of information recording layers (L0 and L1), it is checked whether or not the information recording medium recording/reproducing apparatus 200 has means (firmware) for returning information (data 0, data 1 in FIG. 17, for example) recorded in a plurality of virtual media and it has been successfully checked that the information recording medium recording/reproducing apparatus has means for returning information contained in a plurality of virtual media, and, in the case where information recording/reproducing operation is carried out with respect to each one of a plurality of virtual media, a command can be issued (block #206 shown in FIG. 29, for example) so as to execute switching of a medium with respect to the information recording medium recording/reproducing apparatus 200 prior to carrying out recording/reproducing operation.

According to the embodiments of the present invention, there is provided a disc shaped multi-layered information recording medium, comprising a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format.

According to the embodiments of the present invention, there is provided a recording method using a disc shaped multi-layered information recording medium which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the method comprising recording information in one of the information recording layers; and recording another information in another one of the information recording layers.

According to the embodiments of the present invention, there is provided a reproducing method using a disc shaped multi-layered information recording medium which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the method comprising reproducing information from one of the information recording layers; and reproducing another information from another one of the information recording layers.

According to the embodiments of the present invention, there is provided an reproducing apparatus using a disc shaped multi-layered information recording medium which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the apparatus comprising a first reproduction unit which reproduces information from one of the information recording layers; and a second reproduction unit which reproduces another information from another one of the information recording layers.

According to the embodiments of the present invention, there is provided a disc drive device using an optical disc which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the device comprising an optical system which accesses to each of the information recording layers by using a laser light beam; and a unit which records or reproduces information based on a type of a format used in each of the information recording layers via the optical system.

The information recording medium comprises an optical disc in which information is record or reproduced by means of a laser beam via an optical head. The information recording layers includes a first layer which records first data and a second layer which records second data, the first layer and the second layer being sequentially arranged from a side close to a light receiving face of the optical disc. The type of the format includes a first format and a second format. The information indicating the format includes a first information bit indicating the first format and a second information bit indicating the second format. The first information bit indicates that the first data on the first layer is either the first format or the second format. The second information bit indicates that the second data on the second layer is either of the first format and the second format.

The lead-in area in the first layer records information indicating that a format of each of the information recording layers is different from each another, and the lead-in area in the second layer records information indicating a format of each of the information recording layers.

When a reproduction signal level obtained via the optical head is represented by a variable P, a reproduction signal level from the first layer is defined as P1; a reproduction signal level from the second layer is defined as P2; while a light receiving face location of the optical disc is defined as a reference, when a relative distance from a light receiving face of the optical disc to a focal location of the optical head is represented by a variable x, and then, two different predetermined variables x1 and x2 are defined, a combination state of the first format and second format in the optical disc is discriminated depending on whether or not the reproduction signal levels P1 and/or P2 are between the x1 and x2.

In the case where the reproduction signal levels P1 and P2 are between the x1 and x2, types of formats of the first layer and the second layer are discriminated in accordance with whether or not the reproduction signal level P1 is a signal level which is different from the reproduction signal level P2.

According to the embodiments of the present invention, there is provided an information recording or reproducing method for recording or reproducing information with respect to a multi-layered information recording medium having information recording layers, and transmitting or receiving recording/reproducing information between a host device, the method comprising dividing the recording/reproducing information into items of information; and transmitting or receiving the items of the information as recording/reproducing information of virtual media between the host device.

According to the embodiments of the present invention, there is provided an information recording or reproducing method for recording or reproducing information with respect to a multi-layered information recording medium having information recording layers, and transmitting or receiving recording/reproducing information between a host device, the method comprising a first step of acquiring format information of all information recording layers from one or more of the information recording layers; a second step of notifying the acquired format information to the host device as information of virtual media; and a step of, after terminating the first and second steps, first starting recording/reproducing operation of the one or more of the information recording layers after there has been issued a command for recording/reproducing information with respect to an information recording layer other than the one or more of the information recording layers in which readout is currently being carried out from the host device.

When the information recording layers includes a first information recording layer conforming to a commercially available format and a second information recording layer conforming to a format available later than the commercially available format, the one or more of the information recording layers includes the second information recording layer.

According to the embodiments of the present invention, there is provided an information management method for managing information by transmitting or receiving recording/reproducing information with respect to a multi-layered information recording medium having information recording layers between an information recording/reproducing apparatus, the method comprising checking whether or not the information recording/reproducing apparatus has means for returning information of virtual media; and in the case where it has been checked that the information recording/reproducing apparatus has the means for returning information of virtual media, and information recording/reproducing operation is carried out with respect to each one of the virtual media, issuing a command so as to execute switching of a medium with respect to the information recording/reproducing apparatus prior to carrying out the information recording/reproducing operation.

## Claims

1. A disc shaped multi-layered information recording medium, comprising:
a lead-in area formed at an inner periphery portion; and
information recording layers between the inner periphery portion and an outer periphery portion,
**characterized in that** the lead-in area records information indicating a format of each of the information recording layers, and is configured so that a type of a format used in each of the information recording layers is identified in accordance with the information indicating the format.

2. A recording method using a disc shaped multi-layered information recording medium which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the method **characterized by** comprising:
recording information in one of the information recording layers; and
recording another information in another one of the information recording layers.

3. A reproducing method using a disc shaped multi-layered information recording medium which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the method **characterized by** comprising:
reproducing information from one of the information recording layers; and
reproducing another information from another one of the information recording layers.

4. An reproducing apparatus using a disc shaped multi-layered information recording medium which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the apparatus **characterized by** comprising:
a first reproduction unit which reproduces information from one of the information recording layers; and
a second reproduction unit which reproduces another information from another one of the information recording layers.

5. A disc drive device using an optical disc which comprises a lead-in area formed at an inner periphery portion; and information recording layers between the inner periphery portion and an outer periphery portion, wherein the lead-in area records information indicating a format of each of the information recording layers, and is configured so that a type of a format used in each of the information recording layers is identified in accordance with the information indicating the format, the device **characterized by** comprising:
an optical system which accesses to each of the information recording layers by using a laser light beam; and
a unit which records or reproduces information based on a type of a format used in each of the information recording layers via the optical system.

6. The medium according to claim 1, **characterized in that** the information recording medium comprises an optical disc in which information is record or reproduced by means of a laser beam via an optical head, and
wherein the information recording layers includes a first layer which records first data and a second layer which records second data, the first layer and the second layer being sequentially arranged from a side close to a light receiving face of the optical disc;
the type of the format includes a first format and a second format;
the information indicating the format includes a first information bit indicating the first format and a second information bit indicating the second format;
the first information bit indicates that the first data on the first layer is either the first format or the second format; and
the second information bit indicates that the second data on the second layer is either of the first format and the second format.

7. The medium according to claim 6, **characterized in that** the lead-in area in the first layer records information indicating that a format of each of the information recording layers is different from each another, and the lead-in area in the second layer records information indicating a format of each of the information recording layers.

8. The medium according to claim 6, **characterized in that**, when a reproduction signal level obtained via the optical head is represented by a variable P, a reproduction signal level from the first layer is defined as P1; a reproduction signal level from the second layer is defined as P2; while a light receiving face location of the optical disc is defined as a reference, when a relative distance from a light receiving face of the optical disc to a focal location of the optical head is represented by a variable x, and then, two different predetermined variables x1 and x2 are defined, a combination state of the first format and second format in the optical disc is discriminated depending on whether or not the reproduction signal levels P1 and/or P2 are between the x1 and x2.

9. The medium according to claim 8, **characterized in that**, in the case where the reproduction signal levels P1 and P2 are between the x1 and x2, types of formats of the first layer and the second layer are discriminated in accordance with whether or not the reproduction signal level P1 is a signal level which is different from the reproduction signal level P2.

10. An information recording or reproducing method for recording or reproducing information with respect to a multi-layered information recording medium having information recording layers, and transmitting or receiving recording/reproducing information between a host device, the method **characterized by** comprising:
dividing the recording/reproducing information into items of information; and
transmitting or receiving the items of the information as recording/reproducing information of virtual media to/from the host device.

11. An information recording or reproducing method for recording or reproducing information with respect to a multi-layered information recording medium having information recording layers, and transmitting or receiving recording/reproducing information between a host device, the method **characterized by** comprising:
a first step of acquiring format information of all information recording layers from one or more of the information recording layers;
a second step of notifying the acquired format information to the host device as information of virtual media; and
a step of, after terminating the first and second steps, first starting recording/reproducing operation of the one or more of the information recording layers after there has been issued a command for recording/reproducing information with respect to an information recording layer other than the one or more of the information recording layers in which readout is currently being carried out from the host device.

12. The method according to claim 11, **characterized in that** when the information recording layers includes a first information recording layer conforming to a commercially available format and a second information recording layer conforming to a format available later than the commercially available format, the one or more of the information recording layers includes the second information recording layer.

13. An information management method for managing information by transmitting or receiving recording/reproducing information with respect to a multi-layered information recording medium having information recording layers between an information recording/reproducing apparatus, the method **characterized by** comprising:
checking whether or not the information recording/reproducing apparatus has means for returning information of virtual media; and
in the case where it has been checked that the information recording/reproducing apparatus has the means for returning information of virtual media, and information recording/reproducing operation is carried out with respect to each one of the virtual media, issuing a command so as to execute switching of a medium with respect to the information recording/reproducing apparatus prior to carrying out the information recording/reproducing operation.
